(19) Europäisches Patentamt
European Patent Office
Office européen des brevets

(11) EP 3 617 681 B1

(12) **EUROPEAN PATENT SPECIFICATION**

(45) Date of publication and mention of the grant of the patent:
**04.09.2024 Bulletin 2024/36**

(21) Application number: **18791559.0**

(22) Date of filing: **23.04.2018**

(51) International Patent Classification (IPC):
***G01L 1/00*** *(2006.01)* ***B01J 2/00*** *(2006.01)*
***B01J 2/04*** *(2006.01)* ***G01K 11/12*** *(2021.01)*
***G01L 5/00*** *(2006.01)* ***C09B 67/02*** *(2006.01)*
***B01J 13/18*** *(2006.01)*

(52) Cooperative Patent Classification (CPC):
**B01J 13/185; B01J 2/00; B01J 2/04; C09B 67/0082; C09B 67/0097; G01K 11/12; G01L 1/00; G01L 5/00**

(86) International application number:
**PCT/JP2018/016502**

(87) International publication number:
**WO 2018/199044 (01.11.2018 Gazette 2018/44)**

(54) **STIMULI-RESPONSIVE COMPOSITE PARTICLES AND MANUFACTURING METHOD FOR SAME**

AUF STIMULI REAGIERENDE KOMPOSITPARTIKEL UND HERSTELLUNGSVERFAHREN DAFÜR

PARTICULES MAGNÉTIQUES SENSIBLES AUX STIMULI ET LEUR PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2017 JP 2017088912**

(43) Date of publication of application:
**04.03.2020 Bulletin 2020/10**

(73) Proprietor: **FUJIFILM Corporation**
**Tokyo 106-8620 (JP)**

(72) Inventors:
- **HATTA, Masahiro**
  **Fujinomiya-shi**
  **Shizuoka 418-8666 (JP)**
- **KAWAKAMI, Hiroshi**
  **Fujinomiya-shi**
  **Shizuoka 418-8666 (JP)**

(74) Representative: **Hoffmann Eitle**
**Patent- und Rechtsanwälte PartmbB**
**Arabellastraße 30**
**81925 München (DE)**

(56) References cited:
**WO-A1-2009/072427** **WO-A1-2012/140421**
**JP-A- 2009 063 512** **JP-A- 2009 063 549**
**JP-A- 2009 072 647** **JP-A- 2011 094 974**
**JP-A- H08 220 745** **JP-A- S5 838 190**
**US-A1- 2007 197 383** **US-A1- 2010 323 188**
**US-A1- 2014 161 684** **US-A1- 2015 267 107**

- **DATABASE WPI Week 201065, Derwent World Patents Index; AN 2010-L71753, XP002798587**
- **DATABASE WPI Week 201142, Derwent World Patents Index; AN 2011-G66219, XP002798588**

EP 3 617 681 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND OF THE INVENTION

1. Field of the Invention

The present invention relates to stimuli-responsive composite particles and a manufacturing method thereof.

2. Description of the Related Art

Conventionally, materials that change color in response to stimuli such as pressure and heat have been known and are used in various fields. For example, as a material used for measuring pressure, there is a pressure measuring film represented by PRESCALE (trade name; registered trademark) provided from FUJIFILM Corporation. Furthermore, as a material used for measuring heat distribution, there is a heat distribution-measuring film represented by THERMOSCALE (trade name; registered trademark) provided from FUJIFILM Corporation.
In recent years, as products have been high-functionalized and highly microsctructured, a need for measuring pressure or heat has tended to increase.
With account of this trend, for example, as a material for pressure measurement capable of realizing density that becomes visible or readable with weak pressure, a material for pressure measurement has been suggested which exploits a color reaction between an electron-donating achromatic dye precursor and an electron-accepting compound, in which a difference in color optical density $\Delta D$ before and after the application of pressure of 0.05 MPa is equal to or greater than 0.02 (for example, see JP2009-019949A).
Furthermore, as a heat distribution indicator that is capable of indicating heat distribution with a big temperature difference (for example, equal to or greater than 30°C) and excellently preserved as it is, a heat distribution indicator has been suggested which has a heat distribution-indicating layer on a support, in which the heat distribution-indicating layer contains an organic polymer complex containing an electron-donating dye precursor and a polymer, an electron-accepting compound A and an electron-accepting compound B each having a specific structure causing the electron-donating dye precursor to develop color, and a binder, a content ratio between the electron-accepting compound A and the electron-accepting compound B (A:B) is 95:5 to 50:50 based on mass, and a content ratio of the electron-accepting compound A in all the electron-accepting compounds is equal to or higher than 40% by mass (for example, see JP2010-181218A).
US 2014/161684 A1 discloses a thermal distribution display layer comprising a mixture of microcapsules comprising electron-donating dye precursors, electron-accepting compound particles and a binder.

SUMMARY OF THE INVENTION

Incidentally, in recent years, there has been a growing desire to visually measure pressure, heat, and the like applied during various processes.
Conventionally, the materials for measurement (for example, the material for pressure measurement described in JP2009-019949 and the heat distribution indicator described in JP2010-181218A) are in the form of a film, a sheet, and the like. Accordingly, with these materials, for example, the balance, distribution, intensity, and the like of pressure or heat applied to the entire exterior surface can be visually measured, but it is difficult to visually measure pressure, heat, and the like applied to interior.
An object of an embodiment of the present invention is to provide stimuli-responsive composite particles having excellent color developability.
An object of another embodiment of the present invention is to provide a manufacturing method of stimuli-responsive composite particles having excellent color developability.
Means for achieving the objects include the following aspects.

<1> Stimuli-responsive composite particles comprising microcapsules containing an electron-donating dye precursor encapsulated therein and particles of an electron-accepting compound causing the electron-donating dye precursor to develop color, in which the microcapsules are directly attached to at least a portion of the surface of each of the particles of the electron-accepting compound.
<2> The stimuli-responsive composite particles described in <1> that are used for any one of pressure measurement or heat measurement.
<3> The stimuli-responsive composite particles described in <1> or <2>, in which the electron-accepting compound is at least one kind of compound selected from the group consisting of activated clay, acid clay, kaolin, a phenol-based compound, a salicylic acid-based compound, and a hydroxybenzoic acid ester.

<4> The stimuli-responsive composite particles described in any one of <1> to <3>, in which the electron-accepting compound is at least one kind of compound selected from the group consisting of activated clay, a bisphenol-based compound, and a salicylic acid-based compound.

<5> The stimuli-responsive composite particles described in any one of <1> to <4>, in which the electron-accepting compound is activated clay and used for pressure measurement.

<6> The stimuli-responsive composite particles described in any one of <1> to <4>, in which the electron-accepting compound is a compound represented by General Formula (1) and used for heat measurement.

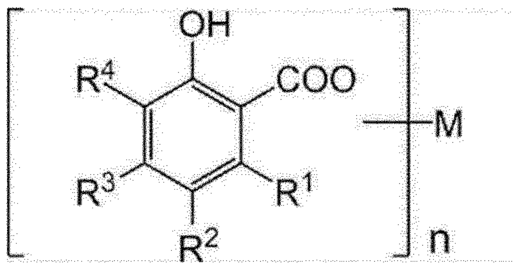

General Formula (1)

In General Formula (1), $R^1$, $R^2$, $R^3$, and $R^4$ each independently represent a hydrogen atom, a halogen atom, an amino group, a carboxy group, a carbamoyl group, a hydroxy group, an alkylsulfonyl group, an alkyl group, or an aryl group. Among $R^1$, $R^2$, $R^3$, and $R^4$, two adjacent groups may form a ring structure by being bonded to each other. M represents an n-valent metal atom, and n represents an integer 1 to 3.

<7> The stimuli-responsive composite particles described in any one of <1> to <6>, in which a ratio of a mass of the electron-donating dye precursor to a mass of the particles of the electron-accepting compound (mass of the electron-donating dye precursor/mass of the particles of the electron-accepting compound) is 0.02 to 20.

<8> The stimuli-responsive composite particles described in any one of <1> to <7> that has an average equivalent circular diameter of 1 μm to 500 μm.

<9> A method of manufacturing the stimuli-responsive composite particles described in any one of <1> to <8>, comprising a step of performing granulation by applying a liquid, which contains microcapsules containing an electron-donating dye precursor encapsulated therein, to the surface of each of particles of an electron-accepting compound causing the electron-donating dye precursor to develop color.

<10> A method of manufacturing the stimuli-responsive composite particles described in any one of <1> to <8>, comprising a step of spraying and drying a liquid which contains microcapsules containing an electron-donating dye precursor encapsulated therein and particles of an electron-accepting compound causing the electron-donating dye precursor to develop color.

According to an embodiment of the present invention, there is provided stimuli-responsive composite particles having excellent color developability.

According to another embodiment of the present invention, there is provided a manufacturing method of the stimuli-responsive composite particles having excellent color developability.

BRIEF DESCRIPTION OF THE DRAWINGS

Fig. 1 is a schematic view of a stimuli-responsive composite particle according to a first embodiment.

Fig. 2 is a schematic view of a stimuli-responsive composite particle according to a second embodiment.

DESCRIPTION OF THE PREFERRED EMBODIMENTS

Hereinafter, an example of embodiments of composite particles and a manufacturing method thereof to which the present invention is applied will be described. However, the present invention is not limited to the following embodiments, and can be embodied by being appropriately modified within the intended scope of the present invention.

In the present disclosure, a range of numerical values described using "to" is a range including the numerical values listed before and after "to" as a minimum value and a maximum value respectively.

Regarding the ranges of numerical values gradationally described in the present disclosure, an upper limit and a lower limit described in a certain range of numerical values may be substituted with an upper limit and a lower limit of

another range of numerical values gradationally described. Furthermore, regarding the ranges of numerical values described in the present disclosure, an upper limit and a lower limit described in a certain range of numerical values may be substituted with the values described in Examples.

In the present disclosure, a combination of two or more preferred aspects is a more preferred aspect.

In the present disclosure, in a case where there is a plurality of kinds of substances corresponding to each component, unless otherwise specified, the amount of each component means the total amount of the plurality of kinds of substances.

In the present disclosure, the term "step" includes not only an independent step, but also a step which cannot be clearly differentiated from other steps as long as the intended goal thereof is achieved.

In the present disclosure, "stimuli" in "stimuli-responsive" means physical stimuli such as pressure and heat given from the outside.

[Stimuli-responsive composite particles]

The stimuli-responsive composite particles (hereinafter, simply referred to as "composite particles" as well) of the present disclosure include microcapsules containing an electron-donating dye precursor encapsulated therein and particles of an electron-accepting compound causing the electron-donating dye precursor to develop color, in which the microcapsules are directly attached to at least a portion of the surface of each of the particles of the electron-accepting compound.

The composite particles of the present disclosure have excellent color developability.

Conventionally, materials that change color in response to stimuli such as pressure and heat have been known and are used in various fields. In recent years, as products have been high-functionalized and highly microsctructured, a need for measuring pressure or heat has tended to increase. For example, JP2009-019949A discloses a material for pressure measurement capable of realizing density that becomes visible or readable with weak pressure. Currently, a desire to visually measure pressure, heat, and the like applied during various processes is growing. The conventional materials for measuring pressure, heat, and the like including the material for pressure measurement described in JP2009-019949A are in the form of a film, a sheet, and the like. Therefore, with these materials, although pressure, heat, and the like applied to an exterior surface can be visually measured, it is difficult to visually measure pressure, heat, and the like applied to interior.

In contrast, because the composite particles of the present disclosure are in the form of particles, by mixing or kneading the composite particles with a material as a measurement target, it is possible to visually measure pressure, heat, and the like applied not only to an exterior surface but also to interior. That is, the composite particles of the present disclosure can be applied to a measurement target which is difficult to measure with the conventional material in the form of a film, a sheet, and the like. Accordingly, the composite particles are extremely useful for assessing various processes.

Furthermore, in the composite particles of the present disclosure, microcapsules containing an electron-donating dye precursor are attached to at least a portion of the surface of each of particles of an electron-accepting compound causing the electron-donating dye precursor to develop color, and the electron-donating dye precursor and the electron-accepting compound are in positions extremely close to each other. Accordingly, the composite particles easily cause a color reaction, and have excellent color developability.

For example, in a case where pressure is applied to the composite particles of the present disclosure, the microcapsules are broken, the electron-donating dye precursor encapsulated in the microcapsules and the electron-accepting compound causing the electron-donating dye precursor to develop color contact each other and have a chemical reaction, and as a result, the composite particles develops color.

Furthermore, for example, in a case where heat is applied to the composite particles of the present disclosure, due to the heat, the wall of the microcapsules becomes permeable to substances. Alternatively, due to the heat, the particles of the electron-accepting compound are melted, and the wall of the microcapsules becomes permeable to substances. Consequently, the electron-donating dye precursor encapsulated in the microcapsules and the electron-accepting compound causing the electron-donating dye precursor to develop color contact each other and have a chemical reaction, and accordingly, the composite particles develop color.

(Structure of composite particles)

As aspects of the composite particles of the present disclosure, for example, there are composite particles according to a first embodiment and composite particles according to a second embodiment that will be described below.

Hereinafter, the aspects of the composite particles of the present disclosure will be described with reference to drawings. Fig. 1 is a schematic view of a composite particle according to the first embodiment. Fig. 2 is a schematic view of a composite particle according to the second embodiment. In the drawings, the constituents represented by the

same reference are the same constituents.

As shown in Fig. 1, a composite particle 1A according to the first embodiment is formed of a particle 10A of an electron-accepting compound and a plurality of microcapsules 20A containing an electron-donating dye precursor, and has a structure in which the plurality of microcapsules 20A containing an electron-donating dye precursor are directly attached to the surface of the particle 10A of an electron-accepting compound.

Furthermore, as shown in Fig. 2, a composite particle 1B according to the second embodiment is formed of a plurality of particles 10B of an electron-accepting compound and a microcapsule 20B containing an electron-donating dye precursor encapsulated therein, and has a structure in which the plurality of particles 10B of an electron-accepting compound are directly attached to the surface of the microcapsule 20B containing an electron-donating dye precursor encapsulated therein.

In both the composite particle 1A according to the first embodiment and the composite particle 1B according to the second embodiment, the microcapsules (20A and 20B) containing an electron-donating dye precursor encapsulated therein are adjacent to the particles (10A and 10B) of an electron-accepting compound causing the electron-donating dye precursor to develop color. Therefore, by the contact between the electron-donating dye precursor and the electron-accepting compound, a color reaction easily occurs, and hence the composite particles have excellent color developability.

In the composite particles of the present disclosure, each of the particles of the electron-accepting compound may be present as a single particle or as a group (for example, an aggregate) of a plurality of particles.

In the composite particles of the present disclosure, as long as the microcapsules containing the electron-donating dye precursor encapsulated therein are directly attached to at least a portion of the surface of each of the particles of the electron-accepting compound, each of the particles of the electron-accepting compound may be in the form of a composite particle combined with a particle of another component different from the electron-accepting compound.

In a case where the electron-accepting compound is an organic compound such as a phenol-based compound, a hydroxybenzoic acid ester, or a salicylic acid-based compound, examples of the aforementioned another component include an oil absorptive white pigment, a sensitizer, and the like.

In the composite particles of the present disclosure, the microcapsules containing the electron-donating dye precursor encapsulated therein just need to be directly attached to at least a portion of the surface of each of the particles of the electron-accepting compound, and the proportion of the microcapsules directly attached to the surface of each of the particles of the electron-accepting compound is not particularly limited. The microcapsules containing the electron-donating dye precursor encapsulated therein directly attached to the surface of each of the particles of the electron-accepting compound may take up 1/4 or more of the surface of the particle, take up 1/2 or more of the surface of the particle, or take up the whole surface of the particle.

In the composite particles of the present disclosure, a ratio of a mass of the microcapsules containing the electron-donating dye precursor to a mass of the particles of the electron-accepting compound (mass of microcapsules containing electron-donating dye precursor/mass of particles of electron-accepting compound) is not particularly limited. For example, from the viewpoint of contact between the particles of the electron-accepting compound and the microcapsules, the ratio is preferably 0.05 to 20, more preferably 0.1 to 10, and even more preferably 0.2 to 5.

In the composite particles of the present disclosure, for example, from the viewpoint of color developability, the ratio of the mass of the electron-donating dye precursor to the mass of the particles of the electron-accepting compound (mass of electron-donating dye precursor/mass of particles of electron-accepting compound) is preferably 0.02 to 20, more preferably 0.05 to 10, and even more preferably 0.1 to 5.

(Physical properties of composite particles)

The average equivalent circular diameter of the composite particles of the present disclosure is not particularly limited. For example, the average equivalent circular diameter is preferably 1 μm to 500 μm, more preferably 2 μm to 200 μm, and even more preferably 5 μm to 100 μm.

In a case where the average equivalent circular diameter of the composite particles of the present disclosure is equal to or greater than 1 μm, handleability is further improved.

In a case where the average equivalent circular diameter of the composite particles of the present disclosure is equal to or smaller than 500 μm, the resolution of a portion under weak stimuli can be further improved.

The average equivalent circular diameter of the composite particles of the present disclosure is measured by the following method.

TEM images of the composite particles observed with a Transmission Electron Microscope (TEM) are input into image processing software Image J (provided from National Institutes of Health (NIH)) and subjected to image processing. More specifically, for 5 composite particles randomly selected from the TEM images of several fields of views, image analysis is performed, and equivalent circular area diameters are calculated. By calculating a simple

average (so-called number average) of the obtained equivalent circular area diameters of 5 composite particles, the average equivalent circular diameter of the composite particles is determined.

(Use of composite particles)

The composite particles of the present disclosure are in the form of particles. Therefore, by mixing or kneading the composite particles with a material as a measurement target, it is possible to visually measure pressure, heat, and the like applied not only to an exterior surface but also to interior that has been difficult to measure visually. Particularly, the composite particles of the present disclosure have an advantage of being easily mixed or kneaded with a material that is hardly miscible with water. Accordingly, for example, even though the material as a measurement target is a resin, the composite particles are applicable thereto. Therefore, the composite particles of the present disclosure are extremely useful for assessing various processes.

For instance, in an aspect, the composite particles exhibit excellent color developability in response to pressure. Therefore, in a case where the composite particles are used as a material for pressure measurement, the composite particles excellently develop color by pressure and can excellently develop color according to a pressure difference (that is, density gradation). Accordingly, the composite particles of the present disclosure are suitable as a material for pressure measurement.

Furthermore, in an aspect, the composite particles of the present disclosure exhibit excellent color developability with respect to heat. Therefore, in a case where the composite particles are used as a material for heat measurement, the composite particles can excellently develop color according to a temperature difference (that is, density gradation). Accordingly, the composite particles of the present disclosure are suitable as a material for heat measurement.

Specifically, examples of the application of the composite particles include tableting pressure at the time of manufacturing tablets, measurement of temperature distribution and the like at the time of drying treatment, measurement of heat distribution at the time of hot-forming a resin material, measurement of pressure distribution at the time of pressure-forming a resin material, and the like.

<Microcapsules>

Each of the microcapsules is constituted with a capsule wall and a component encapsulated in the capsule wall (hereinafter, referred to as "encapsulated material" as well).

Hereinafter, the capsule wall and the encapsulated material will be specifically described.

(Capsule wall)

Examples of the capsule wall of the microcapsules include polyethylene, polystyrene, polyvinyl, polyurethane, polyurea, polyurethane polyurea, and the like.

As the capsule wall, from the viewpoint of storage stability, a polymer obtained using an isocyanate compound and an organic solvent is preferable, a polymer having at least one of a urethane bond or a urea bond is more preferable, and polyurethane polyurea is even more preferable.

(Encapsulated material)

-Electron-donating dye precursor-

An electron-donating dye precursor is encapsulated in the microcapsules.

As the electron-donating dye precursor, any compound can be used without particular limitation as long as the compound has properties of developing color by donating an electron or accepting a proton (a hydrogen ion; $H^+$) of an acid. It is preferable that the electron-donating dye precursor is achromatic.

Particularly, as the electron-donating dye precursor, an achromatic compound is preferable which has a partial skeleton such as lactone, lactam, sultone, spiropyran, ester, or amide that undergoes ring opening or is cleaved in a case where the electron-donating dye precursor contacts an electron-accepting compound which will be described later.

Examples of the electron-donating dye precursor include compounds such as a triphenylmethane phthalide-based compound, a fluoran-based compound, a phenothiazine-based compound, an indolylphthalide-based compound, a leuco-auramine-based compound, a rhodamine lactam-based compound, a triphenylmethane-based compound, a diphenylmethane-based compound, a triazine-based compound, a spiropyran-based aqueous, a fluorene-based compound, a pyridine-based compound, and a pyrazine-based compound.

For details of these compounds, the description in JP1993-257272A (JP-H05-257272A) can be referred to.

Only one kind of electron-donating dye precursor may be encapsulated in the microcapsules. Alternatively,

from the viewpoint of adjusting color and the like, two or more kinds of electron-donating dye precursors may be encapsulated in the microcapsules.

For example, from the viewpoint of color developability, an encapsulation rate of the electron-donating dye precursor in the microcapsules with respect to the total mass of the encapsulated material in the microcapsules is preferably 1% by mass to 100% by mass, more preferably 5% by mass to 99% by mass, and even more preferably 10% by mass to 98% by mass.

-Solvent-

A solvent (so-called oil component) may be encapsulated in the microcapsules.

As the solvent, it is possible to use compounds known as oil components used in thermosensitive recording paper, pressure-sensitive copying paper, and the like.

Examples of the solvent include aromatic hydrocarbon including an alkyl naphthalene-based compound such as diisopropyl naphthalene, a diaryl alkane-based compound such as 1-phenyl-1-xylylethane, an alkyl biphenyl-based compound such as isopropyl biphenyl, a triarylmethane-based compound, an alkylbenzene-based compound, a benzyl naphthalene-based compound, a diaryl alkylene-based compound, and an aryl indane-based compound; aliphatic hydrocarbon such as dibutyl phthalate and isoparaffin; natural animal and plant oils such as soy bean oil, corn oil, cotton seed oil, rapeseed oil, olive oil, palm oil, castor oil, and fish oil; a high-boiling point fraction of a natural substance such as mineral oil; and the like.

In a case where a solvent is encapsulated in the microcapsules, only one kind of solvent may be encapsulated, or two or more kinds of solvents may be encapsulated.

The encapsulation rate of the solvent in the microcapsules is not particularly limited, and can be appropriately set according to the use of the composite particles.

For example, in a case where the composite particles are used for pressure measurement, the encapsulation rate of the solvent in the microcapsules to the total mass of the encapsulated material in the microcapsules can be set to be within a range of 5% by mass to 90% by mass.

For example, in a case where the composite particles are used for heat measurement, the encapsulation rate of the solvent in the microcapsules to the total mass of the encapsulated material in the microcapsules can be set to be within a range of 0% by mass to 70% by mass.

-Other components-

In the microcapsules, in addition to the electron-donating achromatic dye and the solvent as an optional component, other components may be encapsulated.

Examples of those other components include various additives such as an ultraviolet absorber, a light stabilizer, an antioxidant, wax, and an odor inhibitor, an auxiliary solvent, and the like. The auxiliary solvent will be described later.

The type and the encapsulation rate of the additives in the microcapsules are not particularly limited, and can be appropriately set according to the use of the composite particles.

The average primary particle diameter of the microcapsules in the composite particles of the present disclosure is not particularly limited, and can be set to be equal to or greater than 0.1 μm and less than 1,000 μm for example.

Specifically, the average primary particle diameter of the microcapsules in the composite particles of the present disclosure is measured by the following method.

First, the composite particles are observed with a Scanning Electron Microscope (SEM), and 100 microcapsules are randomly selected. Each of the selected microcapsules is observed, the particle diameter thereof is measured, and the average thereof is calculated.

The number-average wall thickness of the microcapsules in the composite particles of the present disclosure is not particularly limited, and can be appropriately set according to the use of the composite particles.

The number-average wall thickness of the microcapsules in the composite particles of the present disclosure depends on various conditions such as the type of the wall material of the capsules, the amount of the encapsulated material, and the particle diameter of the capsules. For example, the number-average wall thickness of the microcapsules can be set to be within a range of 10 nm to 1,000 nm.

In the present disclosure, "number-average wall thickness of microcapsules" refers to a thickness (unit: nm) of a resin film (so-called capsule wall) forming a capsule particle of each of the microcapsules. "Number-average wall thickness" refers to a value obtained by measuring the thicknesses (unit: nm) of the capsule wall of 5 microcapsules by using a Scanning Electron Microscope (SEM) and calculating the average thereof.

Specifically, the number-average wall thickness of the microcapsules in the composite particles of the present disclosure is measured by the following method.

First, a dispersion liquid of the composite particles is obtained. Any support is coated with the obtained dispersion

liquid of the composite particles and dried such that a coating film is formed. A cross-sectional section of the obtained coating film is formed, the formed cross section is observed with SEM, and 5 microcapsules are randomly selected. The cross section of each of the selected microcapsules is observed, the thickness of the capsule wall is measured, and the average thereof is calculated.

As shown in the following formula, the wall thickness of the microcapsules (capsule wall thickness) depends on the relationship among the capsule wall, the encapsulated material, and the particle diameter of the microcapsules. Therefore, the wall thickness of the microcapsules can be adjusted by the particle diameter of the microcapsules (average primary particle diameter), the density of the capsule wall (wall density), the amount of a solute, a solvent, and an auxiliary solvent encapsulated in the microcapsules, the density of a solute, a solvent, and an auxiliary solvent encapsulated in the microcapsules, the amount of the wall material (wall material amount), and the like.

Specifically, for example, by increasing the amount of a solute, a solvent, and an auxiliary solvent encapsulated in the microcapsules (that is, encapsulated materials), the thickness of the capsule wall can be adjusted to be small.

$$\delta = D \times 10^3 / 2 \times \{[(S \times \rho + W \times \gamma \times G) / (S \times \rho)]^{1/3} - 1\}$$

| | |
|---|---|
| $\delta$: thickness of capsule wall | [nm] |
| D: particle diameter of microcapsules | [μm] |
| S: amount of solute, solvent, and auxiliary solvent encapsulated in microcapsules | [kg] |
| $\rho$: wall density | [kg/L] |
| W: wall material amount | [kg] |
| $\gamma$: reaction rate | [-] |
| G: density of solute, solvent, and auxiliary solvent encapsulated in microcapsules | [kg/L] |

The volume-based median diameter of the microcapsules in the composite particles of the present disclosure is not particularly limited, and can be appropriately set according to the use of the composite particles.

For example, in a case where the composite particles are used for pressure measurement, the volume-based median diameter of the microcapsules can be set to be within a range of 0.1 μm to 200 μm.

For example, in a case where the composite particles are used for heat measurement, the volume-based median diameter of the microcapsules can be set to be within a range of 0.1 μm to 10 μm.

In the present disclosure, in a case where all the microcapsules are divided into 2 groups based on a threshold that is a diameter of particles accounting for a cumulative volume of 50%, the total volume of particles having a large diameter and the total volume of particles having a small diameter become equivalent based on a diameter, and "volume-based median diameter of microcapsules" refers to the diameter.

Specifically, the volume-based median diameter of the microcapsules in the composite particles of the present disclosure is measured by the following method.

First, a dispersion liquid of the composite particles is obtained. Any support is coated with the obtained dispersion liquid of the composite particles and dried such that a coating film is formed. The surface of the obtained coating film is imaged with an optical microscope at 150X magnification, sizes of microcapsules in all the composite particles in a range of 2 cm × 2cm are measured, and the volume-average median diameter is calculated.

<Electron-accepting compound>

Examples of the electron-accepting compound include clay substances such as activated clay, acid clay, attapulgite, zeolite, bentonite, and kaolin, a phenol-based compound, a hydroxybenzoic acid ester, and the like.

Among these, as the electron-accepting compound, at least one kind of compound selected from the group consisting of activated clay, acid clay, kaolin, a phenol-based compound (for example, a bisphenol-based compound), a salicylic acid-based compound, and a hydroxybenzoic acid ester is preferable, and at least one kind of compound selected from the group consisting of activated clay, a bisphenol-based compound, and a salicylic acid-based compound is more preferable.

Specific examples of the electron-accepting compound include 2,2-bis(4-hydroxyphenyl)propane [another name: bisphenol A], 2,2-bis(4-hydroxyphenyl)hexafluoropropane [another name: bisphenol AF], 2,2-bis(p-hydroxyphenyl)pentane, 2,2-bis(p-hydroxyphenyl)ethane, 2,2-bis(p-hydroxyphenyl)butane, 2,2-bis(4'-hydroxy-3',5'-dichlorophenyl)propane, 1,1-(p-hydroxyphenyl)cyclohexane, 1, 1-(p-hydroxyphenyl)propane, 1,1-(p-hydroxyphenyl)pentane, 1,1-(p-hydroxyphenyl)-2-ethylhexane, 3,5-bis(α-methylbenzyl)salicylate and a polyvalent metal salt thereof, 3,5-di(tert-butyl)salicylate and a polyvalent metal salt thereof, 3-α,α-dimethylbenzyl salicylate and a polyvalent metal salt thereof, butyl p-hydroxybenzoate, benzyl p-hydroxybenzoate, p-hydroxybenzoic acid-2-ethylhexyl, p-phenyl phenol, p-cumyl phenol, and the like.

For example, in a case where the composite particles of the present disclosure are used for pressure measurement, from the viewpoint of further improving color developability of the composite particles, as the electron-accepting compound, activated clay is more preferable.

Furthermore, for example, in a case where the composite particles of the present disclosure are used for heat measurement, from the viewpoint of further improving color developability of the composite particles, as the electron-accepting compound, a compound represented by General Formula (1) is more preferable.

The compound represented by General Formula (1) is less effective for reducing a glass transition temperature (Tg) of the capsule wall and can express a small change in response to a small temperature difference. Therefore, the compound has an advantage of being capable of bringing about a change in color optical density in response to a small temperature difference.

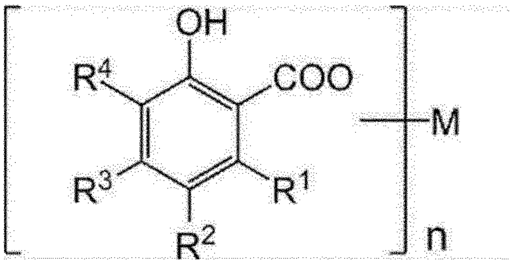

General Formula (1)

In General Formula (1), $R^1$, $R^2$, $R^3$, and $R^4$ each independently represent a hydrogen atom, a halogen atom, an amino group, a carboxy group, a carbamoyl group, a hydroxy group, an alkylsulfonyl group, an alkyl group, or an aryl group. Among $R^1$, $R^2$, $R^3$, and $R^4$, two adjacent groups may form a ring structure by being bonded to each other. M represents an n-valent metal atom, and n represents an integer 1 to 3.

In General Formula (1), the alkyl group represented by $R^1$, $R^2$, $R^3$, $R^4$ may be unsubstituted or may have a substituent. The number of carbon atoms in the alkyl group represented by $R^1$, $R^2$, $R^3$, or $R^4$ is preferably 1 to 8. The alkyl group represented by $R^1$, $R^2$, $R^3$, or $R^4$ may be linear, branched, or cyclic, and may have a substituent such as a phenyl group or a halogen atom.

Examples of the alkyl group represented by $R^1$, $R^2$, $R^3$, or $R^4$ include a methyl group, an ethyl group, a t-butyl group, a cyclohexyl group, a benzyl group, a 2-phenylethyl group, and the like.

It is more preferable that the alkyl group represented by $R^1$, $R^2$, $R^3$, or $R^4$ has a linear or branched structure and has 1 to 4 carbon atoms (here, the number of carbon atoms in a substituent is excluded).

The aryl group represented by $R^1$, $R^2$, $R^3$, or $R^4$ may be unsubstituted or may have a substituent. It is preferable that the aryl group represented by $R^1$, $R^2$, $R^3$, or $R^4$ is a 3-membered, 4-membered, 5-membered, or 6-membered ring having 3 to 6 carbon atoms (here, the number of carbon atoms in a substituent is excluded), and may have a heteroatom.

Examples of the aryl group represented by $R^1$, $R^2$, $R^3$, or $R^4$ include a phenyl group, a tolyl group, a naphthyl group, a 2-furyl group, a 2-thienyl group, a 2-pyridyl group, and the like.

It is more preferable that the aryl group represented by $R^1$, $R^2$, $R^3$, or $R^4$ is an aryl group as a 6-membered ring having 6 to 8 carbon atoms (here, the number of carbon atoms in a substituent is excluded).

Examples of the halogen atom represented by $R^1$, $R^2$, $R^3$, or $R^4$ include a chlorine atom, a bromine atom, an iodine atom, and the like.

Examples of substituents that the amino group, the carbamoyl group, the alkyl group, and the aryl group can further have include a halogen atom, an amino group, a carboxy group, a carbamoyl group, a hydroxy group, an alkylsulfonyl group, an alkyl group, an aryl group, and the like. The number of carbon atoms in a substituent in the alkylsulfonyl group, the alkyl group, and the aryl group is preferably 1 to 8.

An aspect is more preferable in which $R^1$, $R^2$, $R^3$, and $R^4$ each independently represent a hydrogen atom, an alkyl group, or an aryl group.

In a more preferred combination of $R^1$, $R^2$, $R^3$, and $R^4$, $R^1$ represents a hydrogen atom, $R^2$ represents an alkyl group having a phenyl group that has 2 or 3 carbon atoms (the total number of carbon atoms including the number of carbon atoms in the phenyl group is 8 or 9), $R^3$ represents a hydrogen atom, and $R^4$ represents an alkyl group having a phenyl group that has 2 or 3 carbon atoms (the total number of carbon atoms including the number of carbon atoms in the phenyl group is 8 or 9).

M in General Formula (1) represents an n-valent metal atom, and n represents an integer of 1 to 3.

Examples of M include a sodium atom, a potassium atom, a copper atom, an aluminum atom, a calcium atom,

a zinc atom, and the like.

Among these, polyvalent metal atoms are preferred as M. That is, M is preferably a metal atom having a valency equal to or higher than 2, more preferably an aluminum atom, a calcium atom, or a zinc atom, and even more preferably a zinc atom.

Specific examples of the compound represented by General Formula (1) include a zinc salt, an aluminum salt, a calcium salt, a copper salt, and the like of 4-pentadecyl salicylate, 3,5-bis(α-methylbenzyl)salicylate, 3,5-di(tert-octyl)salicylate, 5-α-(p-α-methylbenzylphenyl)ethyl salicylate, 3-α-methylbenzyl-5-tert-octyl salicylate, 5-tetradecyl salicylate, 4-hexyloxysalicylate, 4-cyclohexyloxysalicylate, 4-decyloxysalicylate, 4-dodecyloxysalicylate, 4-pentadecyloxysalicylate, 4-octadecyloxysalicylate, and the like.

The shape of the particles of the electron-accepting compound is not particularly limited. For example, the particles of the electron-accepting compound may have any shape such as a spherical shape, an oval shape, a cubical shape, a needle shape, and an amorphous shape. The same is true in a case where the particles of the electron-accepting compound are groups of a plurality of particles.

The average equivalent circular diameter of the particles of the electron-accepting compound in the composite particles of the present disclosure is not particularly limited, and can be appropriately set according to the purpose of the composite particles.

For example, in a case where the composite particles are used for pressure measurement, the average equivalent circular diameter of the particles of the electron-accepting compound can be set to be within a range of 0.1 μm to 50 μm.

For example, in a case where the composite particles are used for heat measurement, the average equivalent circular diameter of the particles of the electron-accepting compound can be set to be within a range of 0.1 μm to 10 μm.

The average equivalent circular diameter of the particles of the electron-accepting compound is measured by the following method.

TEM images of the particles of the electron-accepting compound observed with a Transmission Electron Microscope (TEM) are input into image processing software Image J (provided from National Institutes of Health) and subjected to image processing. More specifically, for 5 particles of the electron-accepting compound randomly selected from TEM images of several fields of views, image analysis is performed, and equivalent circular area diameters are calculated. By calculating a simple average (so-called number average) of the obtained equivalent circular area diameters of 5 particles of the electron-accepting compound, the average equivalent circular diameter of the particles of the electron-accepting compound is determined.

The composite particles of the present disclosure may contain only one kind of electron-accepting compound or two or more kinds of electron-accepting compounds.

The content of the electron-accepting compound in the composite particles of the present disclosure is not particularly limited. For example, from the viewpoint of color optical density, the content of the electron-accepting compound with respect to 100 parts by mass of the electron-donating dye precursor is preferably 30 parts by mass to 3,000 parts by mass, and more preferably 50 parts by mass to 1,500 parts by mass.

[Manufacturing method of stimuli-responsive composite particles]

The manufacturing method of the stimuli-responsive composite particles of the present disclosure is not particularly limited as long as the stimuli-responsive composite particles described above can be manufactured.

As the manufacturing method of the stimuli-responsive composite particles of the present disclosure, from the viewpoint of easily obtaining the stimuli-responsive composite particles described above and further improving the color developability of the obtained stimuli-responsive composite particles, a manufacturing method of stimuli-responsive composite particles of a first embodiment (hereinafter, referred to as "manufacturing method of the first embodiment" as well) that will be described below is preferable.

Hereinafter, steps in the manufacturing method of the first embodiment will be specifically described. The type and the preferred aspect of components used in the steps will not be described in the following section in some cases because they are the same as those described in the section of "Stimuli-responsive composite particles".

[Manufacturing method of first embodiment]

The manufacturing method of the first embodiment has a step of performing granulation by applying a liquid, which contains the microcapsules containing the electron-donating dye precursor encapsulated therein, to the surface of each of the particles of the electron-accepting compound causing the electron-donating dye precursor to develop color (hereinafter, referred to as "granulation step" as well).

<Granulation step>

The granulation step is a step of performing granulation by applying a liquid, which contains the microcapsules containing electron-donating dye precursor encapsulated therein, (hereinafter, simply referred to as "microcapsule-containing liquid" as well) to the surface of each of the particles of the electron-accepting compound causing the electron-donating dye precursor to develop color.

In the granulation step, the microcapsules containing electron-donating dye precursor encapsulated therein are directly attached to at least a portion of the surface of each of the particles of the electron-accepting compound, whereby the stimuli-responsive composite particles of the present disclosure are granulated.

As long as the microcapsules containing the electron-donating dye precursor encapsulated therein are directly attached to at least a portion of the surface of each of the particles of the electron-accepting compound, and thus particles are obtained, the amount of the microcapsule-containing liquid applied to the surface of each of the particles of the electron-accepting compound is not particularly limited.

Although the amount of the microcapsule-containing liquid applied to the surface of each of the particles of the electron-accepting compound is not particularly limited, for example, from the viewpoint of color developability, the mass of the electron-donating dye precursor contained in the microcapsule-containing liquid is preferably within a range of 3% to 300% of the mass of the particles of the electron-accepting compound, and more preferably within a range of 5% to 200% of the mass of the particles of the electron-accepting compound.

The microcapsule-containing liquid just needs to be able to be applied to the surface of each of the particles of the electron-accepting compound. The target to which the microcapsule-containing liquid is to be applied may be a single particle formed of the electron-accepting compound, a group formed by the gathering of a plurality of particles each formed of the electron-accepting compound, or a composite particle constituted with a single particle formed of the electron-accepting compound and a particle of a component other than the electron-accepting compound.

In a case where the particles of the electron-accepting compound are fine particles, it is preferable that the particles of the electron-accepting compound that are granulated in advance by using a granulator, that is, a group of a plurality of particles may be used as a target to which the microcapsule-containing liquid is to be applied.

Furthermore, in a case where the electron-accepting compound is an organic compound such as a phenol-based compound, a hydroxybenzoic acid ester, or a salicylic acid-based compound, particles obtained by granulating the particles of the electron-accepting compound and particles of other components such as an oil absorptive white pigment and a sensitizer by using a granulator, that is, composite particles constituted with the particles of the electron-accepting compound and particles of other components may be used as a target to which the microcapsule-containing liquid is to be applied.

Details of the components other than the electron-accepting compound are as described above.

Examples of the method for applying the microcapsule-containing liquid to the surface of each of the particles of the electron-accepting compound include methods using a granulator. The method for applying the microcapsule-containing liquid to the surface of each of the particles of the electron-accepting compound by using a granulator is not particularly limited, and can be appropriately set according to the amount of the electron-accepting compound, the physical strength of the electron-accepting compound, and the like.

Examples of the method for performing granulation by applying the microcapsule-containing liquid to the surface of each of the particles of the electron-accepting compound include a fluid bed granulation method, a spray drying method, an agitated granulation method, and the like.

Among these, as the method for performing granulation by applying the microcapsule-containing liquid to the surface of each of the particles of the electron-accepting compound, a fluid bed granulation method is preferable.

According to the fluid bed granulation method, by causing the particles of the electron-accepting compound to flow in the air, the microcapsule-containing liquid can be uniformly applied to the particles of the electron-accepting compound in all directions, and the removal of a volatile component such as a solvent and the application of the microcapsule-containing liquid to the particles of the electron-accepting compound can be simultaneously performed.

Examples of the fluid bed granulation method include a rotary fluid bed granulation method, a jetting fluid bed granulation method, a Wurster fluid bed granulation method, a fluid bed granulation method combined with mechanical agitation, and the like.

Examples of granulators which can be used in the fluid bed granulation method include a fluid bed granulator, a rotary fluid bed granulator, a jetting fluid bed granulator, a fluid bed granulator combined with mechanical agitation, and the like.

Specific examples of the granulator include a fluid bed granulator (model: FD-MP-01) manufactured by powrex corp., FLOW COATER (model: FL-1) manufactured by freund corp, and the like.

The temperature of a gas supplied to the granulator is, for example, preferably 30°C to 150°C, more preferably 40°C to 120°C, and even more preferably 50°C to 100°C.

The speed and the time for the application of the microcapsule-containing liquid to the surface of each of the

particles of the electron-accepting compound are not particularly limited, and can be appropriately set, for example, according to the content of the microcapsules in the microcapsule-containing liquid, the viscosity of the microcapsule-containing liquid, and the like.

The amount of a solvent such as water remaining in the stimuli-responsive composite particles obtained through the granulation step is not particularly limited, and can be appropriately set, for example, according to the use of the stimuli-responsive composite particles.

<Other steps>

It is preferable that the manufacturing method of the first embodiment has a step of forming microcapsules containing an electron-donating dye precursor encapsulated therein (hereinafter, referred to as "microcapsule formation step" as well) before the granulation step.

(Microcapsule formation step)

In the microcapsule formation step, microcapsules containing an electron-donating dye precursor encapsulated therein are formed.

It is preferable that the microcapsule formation step includes a step of dispersing an oil phase, which contains an electron-donating dye precursor and a wall material, in a water phase containing an aqueous medium so as to prepare an emulsified liquid (hereinafter, referred to as "emulsification step" as well), and a step of forming a capsule wall by polymerizing the wall material forming the wall of each of the microcapsules (that is, a capsule wall) in an interface between the oil phase and the water phase so as to form microcapsules containing the electron-donating dye precursor encapsulated therein (hereinafter, referred to as "capsulation step" as well).

-Emulsification step-

In the emulsification step, by dispersing the oil phase, which contains an electron-donating dye precursor and a wall material, in a water phase containing an aqueous medium, an emulsified liquid can be prepared.

The oil phase contains at least an electron-donating dye precursor and a wall material.

Details of the electron-donating dye precursor are as described above.

Examples of the wall material forming the capsule wall include an isocyanate compound, a silane coupling agent, and the like. Among these, as the wall material, an isocyanate compound is preferable, and an isocyanate compound having 2 or more isocyanate groups in one molecule is more preferable.

Examples of the isocyanate compound include m-phenylene diisocyanate, p-phenylene diisocyanate, 2,6-tolylene diisocyanate, 2,4-tolylene diisocyanate, naphthalene-1,4-diisocyanate, diphenylmethane-4,4'-diisocyanate, 3,3'-dimethoxy-biphenyl diisocyanate, 3,3'-dimethyldiphenylmethane-4,4'-diisocyanate, xylylene-1,4-diisocyanate, xylylene-1,3-diisocyanate, 4-chloroxylylene-1,3-diisocyanate, 2-methylxylylene-1,3-diisocyanate, 4,4'-diphenylpropane diisocyanate, 4,4'-diphenylhexafluoropropane diisocyanate, trimethylene diisocyanate, hexamethylene diisocyanate, propylene-1,2-diisocyanate, butylene-1,2-diisocyanate, cyclohexylene-1,2-diisocyanate, cyclohexylene-1,3-diisocyanate, cyclohexylene-1,4-diisocyanate, dicyclohexylmethane-4,4'-diisocyanate, 1,4-bis(isocyanatomethyl)cyclohexane, 1,3-bis(isocyanatomethyl)cyclohexane, isophorone diisocyanate, lysine diisocyanate, and the like.

Examples of diisocyanate compounds which are difunctional isocyanate compounds are as above. As the wall material, triisocyanate compounds which are trifunctional isocyanate compounds, tetraisocyanate compounds which are tetrafunctional isocyanate compounds, and the like analogized from the above compounds may also be used.

Furthermore, examples of the wall material also include adducts of the aforementioned isocyanate compound and an ethylene glycol-based compound, a difunctional alcohol such as a bisphenol-based compound, or phenol.

Examples of a condensate, a polymer, or an adduct using the isocyanate compound include a biuret-type isocyanate compound or an isocyanurate-type isocyanate compound which is a trimer of the aforementioned difunctional isocyanate compound, a compound polyfunctionalized as an adduct of polyol such as trimethylolpropane and a difunctional isocyanate compound, a formalin condensate of benzene isocyanate, a polymer of an isocyanate compound having a polymerizable group such as methacryloyloxyethyl isocyanate, lysine triisocyanate, and the like.

The isocyanate compound is described in "Polyurethane Resin Handbook (edited by Keiji Iwata, published from NIKKAN KOGYO SHIMBUN, LTD. (1987))".

It is preferable that the wall material forming the capsule wall contains an isocyanate compound having 3 or more functional groups among the above.

Examples of the isocyanate compound having 3 or more functional groups include an aromatic isocyanate compound having 3 or more functional groups, an aliphatic isocyanate compound having 3 or more functional groups, and the like.

As the isocyanate compound having 3 or more functional groups, an isocyanate compound (an adduct-type isocyanate compound having 3 or more functional groups) caused to have 3 or more functional groups as an adduct of a difunctional isocyanate compound (a compound having 2 isocyanate groups in a molecule) and a compound having 3 or more active hydrogen groups in a molecule (polyol, polyamine, polythiol, or the like having 3 or more functional groups), a trimer of a difunctional isocyanate compound (a biuret-type or isocyanurate-type isocyanate compound having 3 or more functional groups), and the like are preferable.

The isocyanate compound having 3 or more functional groups may be an adduct of xylylene-1,4-diisocyanate or xylylene-1,3-diisocyanate and trimethylolpropane, a biuret-type isocyanate compound, an isocyanurate-type isocyanate compound, or the like.

As the adduct-type isocyanate compound having 3 or more functional groups, commercial products on the market may be used.

Examples of commercial products of the adduct-type isocyanate compound having 3 or more functional groups include TAKENATE (registered trademark) D-102, D-103, D-103H, D-103M2, P49-75S, D-110N, D-120N (isocyanate value = 3.5 mmol/g), D-140N, and D-160N manufactured by Mitsui Chemicals, Inc., DESMODUR (registered trademark) L75 and UL57SP manufactured by Sumika Bayer Urethane Co., Ltd. CORONATE (registered trademark) HL, HX, and L manufactured by Nippon Polyurethane Industry Co., Ltd., P301-75E manufactured by Asahi Kasei Corporation., BURNOCK (registered trademark) D-750 manufactured by DIC Corporation, and the like.

Among these, as the adduct-type isocyanate compound having 3 or more functional groups, at least one kind of compound selected from the group consisting of TAKENATE (registered trademark) D-110N, D-120N, D-140N, and D-160N manufactured by Mitsui Chemicals, Inc. is more preferable.

As the isocyanurate-type isocyanate compound having 3 or more functional groups, commercial products on the market may also be used.

Examples of commercial products of the isocyanurate-type isocyanate compound having 3 or more functional groups include TAKENATE (registered trademark) D-127N, D-170N, D-170HN, D-172N, and D-177N manufactured by Mitsui Chemicals, Inc. SUMIDUR N3300 and DESMODUR (registered trademark) N3600, N3900, and Z4470BA manufactured by Covestro Japan Co., Ltd., CORONATE (registered trademark) HX and HK manufactured by Nippon Polyurethane Industry Co., Ltd., DURANATE (registered trademark) TPA-100, TKA-100, TSA-100, TSS-100, TLA-100, and TSE-100 manufactured by Asahi Kasei Corporation., and the like.

As the biuret-type isocyanate compound having 3 or more functional groups, commercial products on the market may also be used.

Examples of commercial products of the biuret-type isocyanate compound having 3 or more functional groups include TAKENATE (registered trademark) D-165N and NP1100 manufactured by Mitsui Chemicals, Inc., DESMODUR (registered trademark) N3200 manufactured by Covestro Japan Co., Ltd., DURANATE (registered trademark) 24A-100 manufactured by Asahi Kasei Corporation., and the like.

If necessary, the oil phase may contain a solvent, an additive, and the like.

Details of the solvent and the additive are as described above.

Furthermore, from the viewpoint of improving solubility of the wall material in the oil phase, the oil phase may contain an auxiliary solvent. The solvent described above (so-called oil component) is not included in the auxiliary solvent.

Examples of the auxiliary solvent include a ketone-based compound such as methyl ethyl ketone, an ester-based compound such as ethyl acetate, an alcohol-based compound such as isopropyl alcohol, and the like. The boiling point of the auxiliary solvent is preferably equal to or lower than 130°C.

It is preferable that the water phase contains an aqueous medium and an emulsifier.

Examples of the aqueous medium include water, an alcohol, and a mixture of water and an alcohol. Among these, water is preferable.

The water is not particularly limited, and examples thereof include deionized water.

The emulsifier includes a dispersant, a surfactant, or a combination of these.

Examples of the dispersant include polyvinyl alcohol, modified polyvinyl alcohol, polyacrylic acid amide and a derivative thereof, an ethylene-vinyl acetate copolymer, a styrenemaleic acid anhydride copolymer, an ethylene-maleic acid anhydride copolymer, an isobutylene-maleic acid anhydride copolymer, polyvinylpyrrolidone, an ethylene-acrylic acid copolymer, a vinyl acetate-acrylic acid copolymer, carboxymethyl cellulose, methyl cellulose, casein, gelatin, starch and a derivative thereof, gum Arabic, sodium alginate, and the like.

Among these, as the dispersant, polyvinyl alcohol is preferable.

It is preferable that the dispersant does not react with the wall material or extremely hardly reacts with the wall material. In a case where a dispersant (for example, gelatin) having a reactive amino group in a molecular chain is used, it is preferable to treat the dispersant in advance such that the dispersant loses its reactivity.

As the surfactant, conventionally known surfactants can be used without particular limitation.

Examples of the surfactant include a nonionic surfactant, an anionic surfactant, a cationic surfactant, an amphoteric surfactant, and the like.

In a case where the water phase contains an emulsifier, the water phase may contain only one kind of emulsifier or two or more kinds of emulsifiers.

Although it is preferable that the emulsifier is incorporated into the water phase, the emulsifier may be incorporated into the oil phase.

If necessary, the water phase may contain other components such as an ultraviolet absorber, an antioxidant, and a preservative.

In the manufacturing method of the first embodiment, the total amount of components (hereinafter, referred to as "total amount of solid contents" as well), which consist of the components contained in the oil phase (hereinafter, referred to as "oil phase components" as well) and the components contained in the water phase (hereinafter, referred to as "water phase components" as well) except for the solvent, the auxiliary solvent, and the aqueous medium, corresponds to the total amount of solid contents in the microcapsules to be manufactured.

The content rate of the electron-donating dye precursor in the oil phase is not particularly limited, and can be set to be 5% by mass to 95% by mass with respect to the total amount of solid contents for example.

The content rate of the wall material in the oil phase is not particularly limited, and can be appropriately set inconsideration of the size of the microcapsules, the wall thickness, and the like. The content rate of the wall material in the oil phase can be set to be 5% by mass to 80% by mass with respect to the total amount of solid contents for example.

The content rate of the solvent in the oil phase is not particularly limited, and can be appropriately set according to the type, amount, and the like of the components to be incorporated into the oil phase. The content rate of the solvent in the oil phase can be set to be 0% by mass to 80% by mass with respect to the total amount of solid contents for example.

The content rate of the auxiliary solvent in the oil phase is not particularly limited, and can be appropriately set according to the type, amount, and the like of the wall material to be incorporated into the oil phase components. In a case where the oil phase contains the auxiliary solvent, the content of the auxiliary solvent in the oil phase can be set to be greater than 0 parts by mass and equal to or smaller than 500 parts by mass with respect to 100 parts by mass of the wall material.

In a case where the oil phase contains additives, the content rate of the additives in the oil phase is not particularly limited and can be appropriately set according to the type and the like of the additives.

The content rate of the aqueous medium in the water phase is not particularly limited, and can be appropriately set according to the type, amount, and the like of the components to be incorporated into the water phase.

The content rate of the emulsifier in the water phase is not particularly limited, and can be appropriately set according to the use of the composite particles.

For example, in a case where the composite particles are used for pressure measurement, the content rate of the emulsifier in the water phase with respect to the total mass of the oil phase components and the water phase components can be set to be within a range of 1% by mass to 40% by mass.

For example, in a case where the composite particles are used for heat measurement, the content rate of the emulsifier in the water phase with respect to the total mass of the oil phase components and the water phase components can be wet to be within a range of 2% by mass to 50% by mass.

The method for preparing the emulsified liquid by dispersing the oil phase in the water phase is not particularly limited, and examples thereof include methods using known emulsification apparatuses (for example, dispersing machines) such as a homogenizer, a Menton Gaulin homogenizer, an ultrasound dispersing machine, a dissolver, and a KADI mill.

The amount of the oil phase components to the amount of the water phase components (amount of oil phase components/amount of water phase components) is preferably 0.1 to 1.5, more preferably 0.2 to 1.2, and even more preferably 0.4 to 1.0, based on mass.

In a case where the amount of the oil phase components to the amount of the water phase components is within a range described above, the viscosity of the emulsified liquid can be appropriately maintained, the manufacturing suitability becomes excellent, and the stability of the emulsified liquid becomes excellent.

-Capsulation step-

In the capsulation step, the capsule wall is formed by polymerizing the wall material forming the wall of the microcapsules (that is, capsule wall) in the interface between the oil phase and the water phase, whereby the microcapsules containing the electron-donating dye precursor encapsulated therein are formed. The microcapsules are obtained in the form of a liquid containing the microcapsules (that is, a microcapsule-containing liquid).

The polymerization is performed by carrying out a polymerization reaction of the wall material contained in the oil phase in the emulsified liquid in the interface with the water phase preferably with heating.

The polymerization temperature varies with the type and the like of the wall material. The polymerization temperature is generally 40°C to 100°C, and preferably 50°C to 80°C.

The polymerization time also varies with the type and the like of the wall material. The polymerization time is

generally about 0.5 hours to 10 hours, and preferably about 1 hour to 5 hours.

The higher the polymerization temperature is, the further the polymerization time can be reduced. In a case where an encapsulated material or a wall material that may be decomposed at a high temperature is used, it is preferable to select a polymerization initiator acting at a low temperature and to perform polymerization at a relatively low temperature.

For example, in a case where a silane coupling agent is used as a wall material, the polymerization temperature is preferably 15°C to 40°C and more preferably 20°C to 30°C, and the polymerization time is preferably 1 hour to 40 hours and more preferably 5 hours to 30 hours.

In order to prevent the microcapsules from being aggregated with each other during the polymerization, it is preferable to further add an aqueous medium (water, an aqueous acetic acid solution, or the like) such that the probability that the microcapsules may collide with each other is reduced. Furthermore, it is also preferable to thoroughly stir the reaction solution. In addition, a dispersant for preventing aggregation may be newly added during the polymerization. If necessary, a charge adjuster such as nigrosin or any other auxiliary agents may be added as well. The auxiliary agents can be added at the time of forming the capsule wall or at any point in time.

The average primary particle diameter of the microcapsules in the microcapsule-containing liquid is preferably equal to or greater than 0.1μm and less than 1,000 μm.

The average primary particle diameter of the microcapsules can be adjusted by changing the dispersion condition and the like in the emulsification step.

The particle diameter of the microcapsules in the microcapsule-containing liquid can be measured any measurement apparatus, for example, MICROTRAC MT3300EXII from NIKKISO CO., LTD.

The volume-based median diameter of the microcapsules in the microcapsule-containing liquid is not particularly limited, and can be appropriately set according to the use of the composite particles.

For example, in a case where the composite particles are used for pressure measurement, the volume-based median diameter of the microcapsules in the microcapsule-containing liquid can be set to be within a range of 1 μm to 100 μm.

For example, in a case where the composite particles are used for heat measurement, the volume-based median diameter of the microcapsules in the microcapsule-containing liquid can be set to be within a range of 0.1 μm to 10 μm.

The volume-based median diameter of the microcapsules can be controlled by changing the dispersion condition and the like in the emulsification step.

The volume-based median diameter of the microcapsules in the microcapsule-containing liquid is measured using a laser diffraction. light scattering-type particle size distribution measurement apparatus. As the laser diffraction. light scattering-type particle size distribution measurement apparatus, for example, MICROTRAC MT3300EXII (NIKKISO CO., LTD.) can be used, but the measurement apparatus is not limited thereto.

The number-average wall thickness of the microcapsules in the microcapsule-containing liquid is not particularly limited, and can be appropriately set according to the use of the composite particles.

For example, the number-average wall thickness of the microcapsules in the microcapsule-containing liquid can be set to be within a range of 10 nm to 1,000 nm.

As described above, the number-average wall thickness of the microcapsules can be adjusted by the particle diameter of the microcapsules, the density of the capsule wall (wall density), the amount of the solvent and the auxiliary solvent in the microcapsules, the density of the solvent and the auxiliary solvent in the microcapsules, the amount of the wall material in the microcapsules (wall material amount), and the like.

The number-average wall thickness of the microcapsules in the microcapsule-containing liquid is measured by the following method.

First, any support is coated with the microcapsule-containing liquid and dried such that a coating film is formed. A cross-sectional section of the obtained coating film is formed, the formed cross section is observed with SEM, and 5 microcapsules are randomly selected. The cross section of each of the selected microcapsules is observed, the thickness of the capsule wall is measured, and the average thereof is calculated.

[Manufacturing method of second embodiment]

In addition to the manufacturing method of the first embodiment described above, as a manufacturing method of another embodiment, for example, there is a manufacturing method of a second embodiment described below.

Hereinafter, steps in the manufacturing method of the second embodiment will be specifically described. The type and the preferred aspect of the components used in the steps will not be described herein because they are the same as those described in the section of "Stimuli-responsive composite particles".

The manufacturing method of the second embodiment is a manufacturing method of stimuli-responsive composite particles including a step of spraying and drying a liquid which contains microcapsules containing an electron-donating dye precursor encapsulated therein and particles of an electron-accepting compound causing the electron-donating dye precursor to develop color (hereinafter, referred to as "spraying and drying step" as well).

<Spraying and drying step>

The spraying and drying step is a step of spraying and drying a liquid (hereinafter, referred to as "spray liquid" as well) which contains at least microcapsules containing an electron-donating dye precursor encapsulated therein and particles of an electron-accepting compound causing the electron-donating dye precursor to develop color.
In the spraying and drying step, the microcapsules containing the electron-donating dye precursor encapsulated therein are directly attached to at least a portion of the surface of each of the particles of the electron-accepting compound, whereby the stimuli-responsive composite particles of the present disclosure are granulated.
If necessary, the spray liquid may contain other components such as a sensitizer, an oil absorptive pigment, and an ultraviolet absorber, in addition to the microcapsules containing the electron-donating dye precursor encapsulated therein and the electron-accepting compound.
The content rate of the microcapsules in the spray liquid is not particularly limited, and can be appropriately set according to the use of the composite particles.
For example, in a case where the composite particles are used for pressure measurement, the content rate of the microcapsules in the spray liquid with respect to the total mass of the spray liquid can be set to be within a range of 2% by mass to 40% by mass.
For example, in a case where the composite particles are used for heat measurement, the content rate of the microcapsules in the spray liquid with respect to the total mass of the spray liquid can be set to be within a range of 1% by mass to 30% by mass.
The content rate of the particles of the electron-accepting compound in the spray liquid is not particularly limited, and can be appropriately set according to the use of the composite particles.
For example, in a case where the composite particles are used for pressure measurement, the content rate of the particles of the electron-accepting compound in the spray liquid with respect to the total mass of the spray liquid can be set to be within a range of 3% by mass to 40% by mass.
For example, in a case where the composite particles are used for heat measurement, the content rate of the particles of the electron-accepting compound in the spray liquid with respect to the total mass of the spray liquid can be set to be within a range of 2% by mass to 30% by mass.
The concentration of solid contents in the spray liquid is not particularly limited, and is preferably 5% by mass to 50% by mass for example.
The temperature of the spray liquid is not particularly limited, and is appropriately set according to the type and the amount of the components to be incorporated into the spray liquid for example.
The method for spraying and drying the spray liquid is not particularly limited, and examples thereof include methods using known spraying and drying machines (so-called spray driers).
Specific examples of the spraying and drying machine include a disc-type spray drier (model: L-8i) from OHKAWARA KAKOHKI CO., LTD.
The spraying speed of the spray liquid is not particularly limited, and is appropriately set according to the viscosity and the like of the spray liquid for example.
The drying temperature is, for example, preferably 30°C to 150°C, and more preferably 40°C to 100°C.

<Other steps>

It is preferable that the manufacturing method of the second embodiment has a step (that is, a microcapsulation step) of forming the microcapsules containing the electron-donating dye precursor encapsulated therein before the spraying and drying step.
The microcapsulation step will not be described herein because it is the same as the step described in the section of "Manufacturing method of first embodiment".
The microcapsule-containing liquid obtained through the microcapsulation step can be mixed with the particles of the electron-accepting compound, and the obtained mixture can be used as the spray liquid in the spraying and drying step.
As the manufacturing method of the stimuli-responsive composite particles of the present disclosure, from the viewpoint of obtaining stimuli-responsive composite particles which are highly responsive to stimuli and exhibit further improved color developability, the manufacturing method of the first embodiment is more preferable.

Examples

Hereinafter, the present invention will be more specifically described based on examples, but the present

invention is not limited to the following examples. Unless otherwise specified, "%" and "part" are based on mass.

<Example 1>

-Preparation of liquid of microcapsules containing electron-donating dye precursor encapsulated therein-

The following compound (A) (an indolylphthalide-based compound, 20 parts) as an electron-donating dye precursor was dissolved in 57 parts of linear alkylbenzene (trade name: GRADE ALKENE L, JX Nippon Oil & Energy Corporation; solvent), thereby obtaining a solution A. Then, 15 parts of synthetic isoparaffin (trade name: IP SOLVENT 1620, isoparaffin-based solvent, Idemitsu Kosan Co., Ltd.; solvent (oil)) and 0.2 parts of N,N,N',N'-tetrakis(2-hydroxypropyl)ethylene diamine (trade name: ADEKA POLYETHER EDP-300, ADEKA CORPORATION; wall material) dissolved in 1.2 parts of ethyl acetate (auxiliary solvent) were added to the solution A which was being stirred, thereby obtaining a solution B. Thereafter, 1.2 parts of a trimethylolpropane adduct of tolylene diisocyanate (trade name: BURNOCK (registered trademark) D-750 (trifunctional isocyanate), DIC Corporation; wall material) dissolved in 3 parts of ethyl acetate (auxiliary solvent) was added to the solution B which was being stirred, thereby obtaining a solution C (oil phase). Subsequently, the solution C obtained as above was mixed with a solution (water phase) obtained by dissolving 9 parts of polyvinyl alcohol (trade name: PVA-205, KURARAY CO., LTD.; dispersant) in 140 parts of water, and the obtained mixed liquid was emulsified. Water (340 parts) was added to the obtained emulsified liquid, and the liquid was heated to 70°C with stirring, stirred for 1 hour, and then cooled. Water was further added to the cooled liquid so as to adjust the concentration, thereby obtaining a liquid of electron-donating dye precursor-encapsulated microcapsules having a concentration of solid contents of 20%.

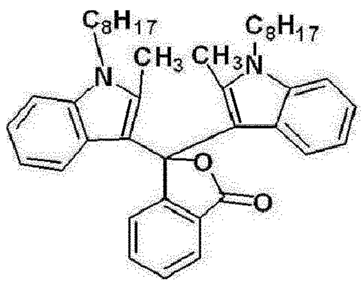

Compound (A)

The volume-based median diameter of the electron-donating dye precursor-encapsulated microcapsules was 8 μm.
In examples, the volume-based median diameter of the electron-donating dye precursor-encapsulated microcapsules was measured using a laser diffraction. light scattering-type particle size distribution measurement apparatus (trade name: MICROTRAC MT3300EXII, NIKKISO CO., LTD.).

-Preparation of composite particles-

Activated clay (trade name: SILTON NCP, acid clay treated with sulfuric acid by heating, MIZUSAWA INDUSTRIAL CHEMICALS, LTD., 20 parts) as an electron-accepting compound was put into a fluid bed granulator (model: FDMP-01, powrex corp.). Then, a supply gas temperature of the fluid bed granulator was adjusted to be 80°C and an exhaust gas temperature thereof was adjusted to be 30°C to 40°C, and 80 parts of the liquid of the electron-donating dye precursor-encapsulated microcapsules obtained as above was sprayed in the fluid bed granulator. After being sprayed, the liquid was dried, thereby obtaining composite particles of Example 1.
The average equivalent circular diameter of the obtained composite particles of Example 1 was 30 μm.
In examples, the average equivalent circular diameter of the composite particles was measured by the following method.
TEM images of the composite particles observed with a Transmission Electron Microscope (TEM) were input into image processing software Image J (provided from National Institutes of Health (NIH)) and subjected to image processing. More specifically, for 5 composite particles randomly selected from the TEM images of several fields of views, image analysis was performed, and equivalent circular area diameters were calculated. By calculating a simple average (so-called number average) of the obtained equivalent circular area diameters of 5 composite particles, the average equivalent circular diameter of the composite particles was determined.

The obtained composite particles of Example 1 was observed with an optical microscope. As a result, it was confirmed that the electron-donating dye precursor-encapsulated microcapsules were directly attached to the surface of each of the particles of the activated clay as an electron-accepting compound.

Furthermore, as a result of applying a pressure of 10 MPa to the composite particles of Example 1 for 1 minute, it was confirmed that the composite particles developed color.

<Evaluation>

-Evaluation of color developability by pressure application-

Polyethylene (PE) pellets (100 parts) and 50 parts of the composite particles of Example 1 were mixed together, thereby obtaining a mixture.

Then, a mold was filled with the obtained mixture, and hot forming was performed at 150°C. The molded material was taken out of the mold, and the density of the coloring portion on the surface of the molded material was measured using a spectro-densitometer (trade name: X-Rite504, X-Rite, Incorporated.).

The density of the minimally coloring portion (that is, a minimal color optical density) was subtracted from the density of the maximally coloring portion (that is, a maximum color optical density) within the surface of the molded material, thereby calculating a density difference (referred to as "Δ color optical density" as well). Based on the following evaluation standards, the color developability of the composite particles by pressure application was evaluated. The results are shown in Table 1.

The larger the value of the Δ color optical density, the higher the responsiveness of the composite particles with respect to pressure application, and the better the color developability. In a case where the composite particles are evaluated as "A" or "B", the composite particles are unproblematic for practical use.

-Evaluation standards-

A: The Δ color optical density was equal to or greater than 0.5.
B: The Δ color optical density was equal to or greater than 0.1 and less than 0.5.
C: The Δ color optical density was less than 0.1.

<Example 2>

A liquid of electron-donating dye precursor-encapsulated microcapsules having a concentration of solid contents of 20% was obtained by performing the same operation as in Example 1, except that in Example 1, "compound (A)" as an electron-donating dye precursor was replaced with "compound (B): 2'-methyl-6'-(N-p-tolyl-N-ethylamino)sipro[isobenzofuran-1(3H),9'-[9H]xanthen]-3-one".

The volume-based median diameter of the obtained electron-donating dye precursor-encapsulated microcapsules was 8 μm.

Then, by performing the same operation as in Example 1 by using the obtained liquid of electron-donating dye precursor-encapsulated microcapsules, composite particles of Example 2 were obtained. By using the obtained composite particles of Example 2, the color developability by pressure application was evaluated by performing the same operation as in Example 1. The results are shown in Table 1.

The average equivalent circular diameter of the obtained composite particles of Example 2 was 30 μm.

The obtained composite particles of Example 2 were observed with an optical microscope. As a result, it was confirmed that the electron-donating dye precursor-encapsulated microcapsules were directly attached to the surface of each of the particles of the activated clay as an electron-accepting compound.

Furthermore, as a result of applying a pressure of 10 MPa to the composite particles of Example 2 for 1 minute, it was confirmed that the composite particles developed color.

<Example 3>

Composite particles of Example 3 were obtained by performing the same operation as in Example 1, except that in Example 1, "activated clay" as an electron-accepting compound was replaced with "zinc 3,5-bis(α-methylbenzyl)salicylate". By using the obtained composite particles of Example 3, the color developability by pressure application was evaluated by performing the same operation as in Example 1. The results are shown in Table 1.

The average equivalent circular diameter of the obtained composite particles of Example 3 was 30 μm.

The obtained composite particles of Example 3 were observed with an optical microscope. As a result, it was confirmed that the electron-donating dye precursor-encapsulated microcapsules were directly attached to the surface of each of the particles of zinc 3,5-bis($\alpha$-methylbenzyl)salicylate as an electron-accepting compound.

Furthermore, as a result of applying a pressure of 10 MPa to the composite particles of Example 3 for 1 minute, it was confirmed that the composite particles developed color.

<Example 4>

By performing the same operation as in Example 1, a liquid of electron-donating dye precursor-encapsulated microcapsules having a concentration of solid contents of 20% was obtained.

Then, 20 parts of activated clay (trade name: SILTON NCP, acid clay treated with sulfuric acid by heating, MIZUSAWA INDUSTRIAL CHEMICALS, LTD.) as an electron-accepting compound was added to 100 parts of a 1% aqueous solution of sodium hexametaphosphate (trade name, Koizumi Kagaku Kogyosho Co., Ltd.) and dispersed.

The obtained dispersion liquid of the electron-accepting compound (120 parts) and 80 parts of the liquid of the electron-donating dye precursor-encapsulated microcapsules were mixed together, and the obtained mixed liquid was sprayed and dried in hot air of 120°C by using a disc-type spray drier (model: L-8i, OHKAWARA KAKOHKI CO., LTD.), thereby obtaining composite particles of Example 4. By using the obtained composite particles of Example 4, the color developability by pressure application was evaluated by performing the same operation as in Example 1. The results are shown in Table 1.

The average equivalent circular diameter of the obtained composite particles of Example 4 was 30 $\mu$m.

The obtained composite particles of Example 4 were observed with an optical microscope. As a result, it was confirmed that the electron-donating dye precursor-encapsulated microcapsules were directly attached to the surface of each of the particles of the activated clay as an electron-accepting compound.

Furthermore, as a result of applying a pressure of 10 MPa to the composite particles of Example 4 for 1 minute, it was confirmed that the composite particles developed color.

<Comparative Example 1>

By performing the same operation as in Example 1, a liquid of electron-donating dye precursor-encapsulated microcapsules having a concentration of solid contents of 20% was obtained. Then, 111 parts of the liquid of the electron-donating dye precursor-encapsulated microcapsules and 27.8 parts of crystalline cellulose were mixed together. The obtained mixed liquid was dried in a vacuum, and then 50 parts of the obtained vacuum-dried material and 27.8 parts of activated clay (trade name: SILTON NCP, acid clay treated with sulfuric acid by heating, MIZUSAWA INDUSTRIAL CHEMICALS, LTD.) as an electron-accepting compound were mixed together, thereby obtaining a particle mixture.

Thereafter, the color developability by pressure application was evaluated by performing the same operation as in Example 1, except that a mixture was obtained by mixing together 77.8 parts of the obtained particle mixture and 100 parts of polyethylene (PE) pellets. The results are shown in Table 1.

[Table 1]

| | Electron-donating dye precursor | Electron-accepting compound | Mass ratio (electron-donating dye precursor/ electron -accepting compound) | Form | Manufacturin g method | Evaluation of color developability by pressure application |
|---|---|---|---|---|---|---|
| Example 1 | Compound (A) | Activated clay | 16/20 | Composite particles | Fluid bed granulation method | A |
| Example 2 | Compound (B) | Activated clay | 16/20 | Composite particles | Fluid bed granulation method | A |
| Example 3 | Compound (A) | Zinc 3,5-bis($\alpha$-methylbenzyl) salicylate | 16/20 | Composite particles | Fluid bed granulation method | B |

(continued)

| | Electron-donating dye precursor | Electron-accepting compound | Mass ratio (electron-donating dye precursor/ electron -accepting compound) | Form | Manufacturing method | Evaluation of color developability by pressure application |
|---|---|---|---|---|---|---|
| Example 4 | Compound (A) | Activated clay | 16/20 | Composite particles | Spray drying method | B |
| Comparative Example 1 | Compound (A) | Activated clay | 16/20 | Particle mixture | Mixing method | C |

As shown in Table 1, the stimuli-responsive composite particles of Example 1 to Example 4, which were obtained by allowing the microcapsules containing the electron-donating dye precursor encapsulated therein to be directly attached to at least a portion of the surface of each of the particles of the electron-accepting compound causing the electron-donating dye precursor to develop color, exhibited excellent color developability in response to pressure.

In contrast, in the particle mixture of Comparative Example 1, which was obtained by simply mixing the microcapsules containing the electron-donating dye precursor encapsulated therein with the particles of the electron-accepting compound causing the electron-donating dye precursor to develop color, exhibited poorer color developability in response to pressure compared to the stimuli-responsive composite particles of Example 1 to Example 4.

The stimuli-responsive composite particles (for example, Example 1) using activated clay as an electron-accepting compound exhibited better color developability in response to pressure compared to the stimuli-responsive composite particles (for example, Example 3) using zinc 3,5-bis($\alpha$-methylbenzyl)salicylate.

The stimuli-responsive composite particles (for example, Example 1), which were manufactured by so-called fluid bed granulation method of performing granulation by applying the liquid that contained the microcapsules containing the electron-donating dye precursor encapsulated therein to the surface of the particles of the electron-accepting compound, exhibited better color developability in response to pressure, compared to the stimuli-responsive composite particles (for example, Example 4) manufactured by so-called spray drying method of spraying and drying the liquid that contained the microcapsules containing the electron-donating dye precursor encapsulated therein and the particles of the electron-accepting compound.

<Example 5>

-Preparation of liquid of electron-donating dye precursor-encapsulated microcapsules-

A compound represented by Structural Formula [201] (hereinafter, referred to as "compound [201]" as well) as an electron-donating dye precursor (20 parts) and 0.8 parts of an ultraviolet absorber (trade name: TINUVIN (registered trademark) P, BASF SE) were added to 40 parts of ethyl acetate (auxiliary solvent), dissolved by being heated at 70°C, and then cooled down to 45°C. As a wall material, 32 parts of an isocyanurate-type trifunctional isocyanate compound (trade name: TAKENATE (registered trademark) D-127N, Mitsui Chemicals, Inc.) was added to and mixed with the cooled solution, thereby obtaining a mixed liquid. Then, the obtained mixed liquid was added to 100 parts of water phase of a 6% aqueous polyvinyl alcohol solution (trade name: MP-103, KURARAY CO., LTD.), and emulsified and dispersed at a rotation speed of 6,9800 rpm (revolutions per minute) by using ROBOMIX (TOKUSHUKIKA KOGYO Co., Ltd.), thereby obtaining an emulsified liquid. Water (8 parts) and 2 parts of tetraethylenepentamine (TOKYO CHEMICAL INDUSTRY CO., LTD.) were added to the obtained emulsified liquid, and then a capsulation reaction was performed for 4 hours at a temperature of 60°C. Water was further added to the liquid obtained after the capsulation reaction so as to adjust the concentration, thereby obtaining a liquid of electron-donating dye precursor-encapsulated microcapsules having a concentration of solid contents of 20%.

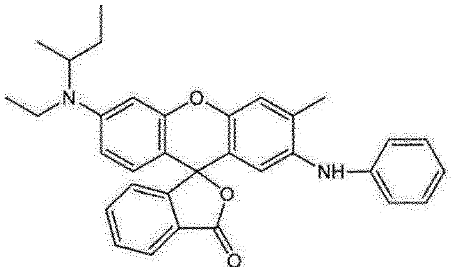

[201]

The volume-based median diameter of the obtained electron-donating dye precursor-encapsulated microcapsules was 0.7 μm.

-Preparation of composite particles-

As an electron-accepting compound, 20 parts of zinc 3,5-bis(α-methylbenzyl)salicylate (form: particles, SANKO CO., LTD.) was put into a fluid bed granulator (model: FDMP-01, powrex corp.). Then, a supply gas temperature of the fluid bed granulator was adjusted to be 80°C and an exhaust gas temperature thereof was adjusted to be 30°C to 40°C, and 80 parts of the liquid of the electron-donating dye precursor-encapsulated microcapsules obtained as above was sprayed in the fluid bed granulator. After being sprayed, the liquid was dried, thereby obtaining composite particles of Example 5.

The average equivalent circular diameter of the obtained composite particles of Example 5 was 20 μm.

The obtained composite particles of Example 5 were observed with an optical microscope. As a result, it was confirmed that the electron-donating dye precursor-encapsulated microcapsules were directly attached to the surface of each of the particles of zinc 3,5-bis(α-methylbenzyl)salicylate as an electron-accepting compound.

Furthermore, as a result of heating the composite particles of Example 5 at 150°C for 1 minute, it was confirmed that the composite particles developed color.

<Evaluation>

-Evaluation of color developability by heating-

The composite particles of Example 5 (50 parts) and 500 parts of crystalline cellulose as an excipient were mixed together, thereby obtaining powder for tableting. From the obtained powder for tableting, a predetermined amount of powder was taken, and by using a rotary tablet press (trade name: HT-AP-SS, HATA TEKKOSHO CO., LTD.) and a 10 mmϕ pestle with rounded corners, the powder was compression-molded at a rotation speed of 20 rpm and a tableting pressure of 10 kN, thereby obtaining tablets. The density of the surface of each of the obtained tablets was measured using a spectro-densitometer (trade name: X-Rite504, X-Rite, Incorporated.) and adopted as non-color optical density.

Then, the obtained tablets were put into an oven and heated for 1 hour at 150°C. The tablets were taken out of the oven, and the density of the coloring portion of the surface of each of the tablets was measured using a spectro-densitometer (trade name: X-Rite504, X-Rite, Incorporated.).

By subtracting the non-color optical density from the density of the maximally coloring portion of the surface of the tablets (that is, the maximum color optical density), a density difference (referred to as "Δ color optical density" as well) was calculated. Based on the following evaluation standards, the color developability of the composite particles by heating was evaluated. The results are shown in Table 2.

The higher the value of Δ color optical density, the better the responsiveness of the composite particles to heating, and the better the color developability. In a case where the composite particles are evaluated as "A" or "B", the composite particles are unproblematic for practical use.

-Evaluation standards-

A: The Δ color optical density was equal to or higher than 0.5.
B: The Δ color optical density was equal to or higher than 0.1 and less than 0.5.
C: The Δ color optical density was less than 0.1.

<Example 6>

A liquid of electron-donating dye precursor-encapsulated microcapsules having a concentration of solid contents of 20% was obtained by performing the same operation as in Example 5, except that in Example 5, "compound [201]" as an electron-donating dye precursor was replaced with "compound (B): 2'-methyl-6'-(N-p-tolyl-N-ethylamino)sipro[isobenzofuran-1(3H),9'-[9H]xanthen]-3-one".

The volume-based median diameter of the obtained electron-donating dye precursor-encapsulated microcapsules was 0.7 μm.

Then, by using the obtained liquid of electron-donating dye precursor-encapsulated microcapsules, composite particles of Example 6 were obtained by performing the same operation as in Example 5. By using the obtained composite particles of Example 6, the color developability by heating was evaluated by performing the same operation as in Example 5. The results are shown in Table 2.

The average equivalent circular diameter of the obtained composite particles of Example 6 was 20 μm.

The obtained composite particles of Example 6 were observed with an optical microscope. As a result, it was confirmed that the electron-donating dye precursor-encapsulated microcapsules were directly attached to the surface of each of the particles of zinc 3,5-bis(α-methylbenzyl)salicylate as an electron-accepting compound.

Further, as a result of heating the composite particles of Example 6 for 1 minute at 150°C, it was confirmed that the composite particles developed color.

<Example 7>

Composite particles of Example 7 were obtained by performing the same operation as in Example 5, except that in Example 5, "zinc 3,5-bis(α-methylbenzyl)salicylate" as an electron-accepting compound was replaced with "compound (2-1) represented by the following structural formula: SUMILIZER (registered trademark) WX-R (trade name), Sumitomo Chemical Co., Ltd.". By using the obtained composite particles of Example 7, the color developability by heating was evaluated by performing the same operation as in Example 5. The results are shown in Table 2.

The average equivalent circular diameter of the obtained composite particles of Example 7 was 20 μm.

The obtained composite particles of Example 7 were observed with an optical microscope. As a result, it was confirmed that the electron-donating dye precursor-encapsulated microcapsules were directly attached to the surface of each of the particles of the compound (2-1) represented by the following structural formula as an electron-accepting compound.

Furthermore, as a result of heating the composite particles of Example 7 for 1 minute at 150°C, it was confirmed that the composite particles developed color.

<Example 8>

-Preparation of liquid of electron-donating dye precursor-encapsulated microcapsules-

By performing the same operation as in Example 5, a liquid of electron-donating dye precursor-encapsulated microcapsules having a concentration of solid contents of 20% was obtained.

-Preparation of dispersion liquid of electron-accepting compound-

A 15% aqueous solution of polyvinyl alcohol (trade name: PVA-205, KURARAY CO., LTD.; dispersant, 60 parts) was added to 190 parts of water. Furthermore, 60 parts of zinc 3,5-bis(α-methylbenzyl)salicylate (SANKO CO., LTD.) as an electron-accepting compound, 3 parts of a compound (2-1) (trade name: SUMILIZER (registered trademark) WX-R, Sumitomo Chemical Co., Ltd.) represented by the following structural formula, and 6 parts of a sodium salt of a special polycarboxylic acid-type polymer (trade name: DEMOL (registered trademark) EP, concentration: 25%, Kao Corporation) were added thereto. The obtained liquid was subjected to a dispersion treatment using a sand grinder, thereby obtaining a dispersion liquid containing dispersed particles having a volume-based median diameter of 0.7 μm (value measured using MICROTRAC FRA from Honeywell International Inc.). Water was further added to the obtained dispersion liquid so as to adjust the concentration, thereby obtaining a dispersion liquid of an electron-accepting compound having a concentration of solid contents of 22%.

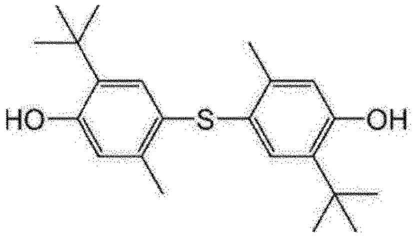

Compound (2-1)

-Preparation of pigment dispersion liquid-

Calcium carbonate (40 parts), 1 part of a 40% aqueous solution of sodium hexametaphosphate (Koizumi Kagaku Kogyosho Co., Ltd.), and 0.6 parts of a 40% aqueous solution of a sodium salt of an acrylic acid/maleic acid copolymer (trade name: POIZ 520, Kao Corporation) were added to 180 parts of water. The obtained liquid was subjected to a dispersion treatment using a sand grinder, thereby obtaining a pigment dispersion liquid as a calcium carbonate dispersion liquid having a volume-based median diameter of 1.0 μm (value measured using LA750 from HORIBA, Ltd.).

The entirety of the liquid of electron-donating dye precursor-encapsulated microcapsules obtained as above, the entirety of the dispersion liquid of the electron-accepting compound obtained as above, and the entirety of the pigment dispersion liquid obtained as above were mixed together, and the obtained mixed liquid was sprayed and dried in hot air of 120°C by using a disc-type spray drier (model: L-8i, OHKAWARA KAKOHKI CO., LTD.), thereby obtaining composite particles of Example 8. By using the obtained composite particles of Example 8, the color developability by heating was evaluated by performing the same operation as in Example 5. The results are shown in Table 2.

The average equivalent circular diameter of the obtained composite particles of Example 8 was 15 μm.

The obtained composite particles of Example 8 were observed with an optical microscope. As a result, it was confirmed that the electron-donating dye precursor-encapsulated microcapsules were directly attached to the surface of each of the particles of the zinc 3,5-bis(α-methylbenzyl)salicylate and the compound (2-1) represented by the above structural formula that were electron-accepting compounds.

Furthermore, as a result of heating the composite particles of Example 8 for 1 minute at 150°C, it was confirmed that the composite particles developed color.

<Comparative Example 2>

By performing the same operation as in Example 5, a liquid of electron-donating dye precursor-encapsulated microcapsules was obtained. Then, 111 parts of the liquid of electron-donating dye precursor-encapsulate microcapsules and 27.8 parts of crystalline cellulose were mixed together. The obtained mixed liquid was dried in a vacuum, and 50 parts of the vacuum-dried material and 27.8 parts of zinc 3,5-bis(α-methylbenzyl)salicylate as an electron-accepting compound were mixed together, thereby obtaining a particle mixture.

Thereafter, the color developability by heating was evaluated by performing the same operation as in Example 5, except that 77.8 parts of the obtained particle mixture and 472.2 parts of crystalline cellulose were mixed together so as to obtain a mixture. The results are shown in Table 2.

[Table 2]

| | Electron-donating dye precursor | Electron-accepting compound | Mass ratio (electron-donating dye precursor/ electron-accepting compound) | Form | Manufacturing method | Evaluation of color developability by heating |
|---|---|---|---|---|---|---|
| Example 5 | Compound [201] | Zinc 3,5-bis(α-methylbenzyl) salicylate | 16/20 | Composite particles | Fluid bed granulation method | A |
| Example 6 | Compound (B) | Zinc 3,5-bis(α-methylbenzyl) salicylate | 16/20 | Composite particles | Fluid bed granulation method | A |

(continued)

| | Electron-donating dye precursor | Electron-accepting compound | Mass ratio (electron-donating dye precursor/ electron-accepting compound) | Form | Manufacturing method | Evaluation of color developability by heating |
|---|---|---|---|---|---|---|
| Example 7 | Compound [201] | Compound (2-1) | 16/20 | Composite particles | Fluid bed granulation method | B |
| Example 8 | Compound [201] | Zinc 3,5-bis(α-methylbenzyl) salicylate + compound (2-1) | 16/20 | Composite particles | Spray drying method | B |
| Comparative Example 2 | Compound [201] | Zinc 3,5-bis(α-methylbenzyl) salicylate | 16/20 | Particle mixture | Mixing method | C |

As shown in Table 2, the stimuli-responsive composite particles of Example 5 to Example 8, which were obtained by allowing the microcapsules containing the electron-donating dye precursor encapsulated therein to be directly attached to at least a portion of the surface of each of the particles of the electron-accepting compound causing the electron-donating dye precursor to develop color, exhibited excellent color developability in response to heat.

In contrast, in the particle mixture of Comparative Example 2, which was obtained by simply mixing the microcapsules containing the electron-donating dye precursor encapsulated therein with the particles of the electron-accepting compound causing the electron-donating dye precursor to develop color, exhibited poorer color developability in response to heat compared to the stimuli-responsive composite particles of Example 5 to Example 8.

The stimuli-responsive composite particles (for example, Example 5) using zinc 3,5-bis(α-methylbenzyl)salicylate as an electron-accepting compound exhibited better color developability in response to heat compared to the stimuli-responsive composite particles (for example, Example 7) using a bisphenol-based compound.

The stimuli-responsive composite particles (for example, Example 5), which were manufactured by so-called fluid bed granulation method of performing granulation by applying the liquid that contained the microcapsules containing the electron-donating dye precursor encapsulated therein to the surface of the particles of the electron-accepting compound, exhibited better color developability in response to heat, compared to the stimuli-responsive composite particles (for example, Example 8) manufactured by so-called spray drying method of spraying and drying the liquid that contained the microcapsules containing the electron-donating dye precursor encapsulated therein and the particles of the electron-accepting compound.

## Claims

**1.** Stimuli-responsive composite particles comprising:

microcapsules containing an electron-donating dye precursor encapsulated therein; and
particles of an electron-accepting compound causing the electron-donating dye precursor to develop color,
wherein the microcapsules are directly attached to at least a portion of the surface of each of the particles of the electron-accepting compound.

**2.** The stimuli-responsive composite particles according to claim 1 that are used for any one of pressure measurement or heat measurement.

**3.** The stimuli-responsive composite particles according to claim 1 or 2,
wherein the electron-accepting compound is at least one kind of compound selected from the group consisting of activated clay, acid clay, kaolin, a phenol-based compound, a salicylic acid-based compound, and a hydroxybenzoic

acid ester.

4. The stimuli-responsive composite particles according to any one of claims 1 to 3, wherein the electron-accepting compound is at least one kind of compound selected from the group consisting of activated clay, a bisphenol-based compound, and a salicylic acid-based compound.

5. The stimuli-responsive composite particles according to any one of claims 1 to 4, wherein the electron-accepting compound is activated clay and used for pressure measurement.

6. The stimuli-responsive composite particles according to any one of claims 1 to 4,

wherein the electron-accepting compound is a compound represented by General Formula (1) and used for heat measurement,

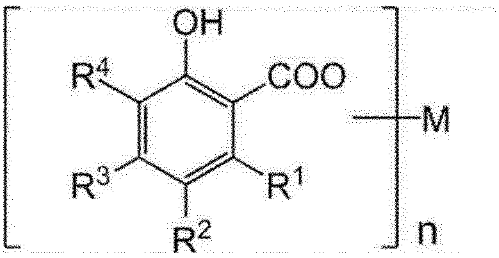

General Formula (1)

in General Formula (1), $R^1$, $R^2$, $R^3$, and $R^4$ each independently represent a hydrogen atom, a halogen atom, an amino group, a carboxy group, a carbamoyl group, a hydroxy group, an alkylsulfonyl group, an alkyl group, or an aryl group, among $R^1$, $R^2$, $R^3$, and $R^4$, two adjacent groups may form a ring structure by being bonded to each other, M represents an n-valent metal atom, and n represents an integer 1 to 3.

7. The stimuli-responsive composite particles according to any one of claims 1 to 6, wherein a ratio of a mass of the electron-donating dye precursor to a mass of the particles of the electron-accepting compound is 0.02 to 20.

8. The stimuli-responsive composite particles according to any one of claims 1 to 7 that has an average equivalent circular diameter of 1 μm to 500 μm.

9. A method of manufacturing the stimuli-responsive composite particles according to any one of claims 1 to 8, comprising:
a step of performing granulation by applying a liquid, which contains microcapsules containing an electron-donating dye precursor encapsulated therein, to the surface of each of the particles of an electron-accepting compound causing the electron-donating dye precursor to develop color.

10. A method of manufacturing the stimuli-responsive composite particles according to any one of claims 1 to 8, comprising:
a step of spraying and drying a liquid which contains microcapsules containing an electron-donating dye precursor encapsulated therein and particles of an electron-accepting compound causing the electron-donating dye precursor to develop color.

## Patentansprüche

1. Stimuliresponsive Kompositpartikel, umfassend:

Mikrokapseln, die einen darin eingekapselten elektronenabgebenden Farbstoffvorläufer enthalten; und
Partikel einer elektronenaufnehmenden Verbindung, die den elektronenabgebenden Farbstoffvorläufer zur Farbentwicklung veranlassen,
worin die Mikrokapseln direkt an mindestens einen Teil der Oberfläche jedes Partikels der elektronenaufnehmenden Verbindung angebracht sind.

2. Stimuliresponsive Kompositpartikel gemäß Anspruch 1, die zur Druckmessung oder Wärmemessung verwendet werden.

3. Stimuliresponsive Kompositpartikel gemäß Anspruch 1 oder 2, worin die elektronenaufnehmende Verbindung mindestens eine Art von Verbindung ist, die aus der Gruppe ausgewählt ist, bestehend aus aktiviertem Ton, saurem Ton, Kaolin, einer phenolbasierten Verbindung, einer salicylsäurebasierten Verbindung und einem Hydroxybenzoesäureester.

4. Stimuliresponsive Kompositpartikel gemäß einem der Ansprüche 1 bis 3, worin die elektronenaufnehmende Verbindung mindestens eine Art von Verbindung ist, die aus der Gruppe ausgewählt ist, bestehend aus aktiviertem Ton, einer bisphenolbasierten Verbindung und einer salicylsäurebasierten Verbindung.

5. Stimuliresponsive Kompositpartikel gemäß einem der Ansprüche 1 bis 4, worin die elektronenaufnehmende Verbindung aktivierter Ton ist und die zur Druckmessung verwendet werden.

6. Stimuliresponsive Kompositpartikel gemäß einem der Ansprüche 1 bis 4,

worin die elektronenaufnehmende Verbindung eine Verbindung ist, die durch die allgemeinen Formel (1) dargestellt wird, und die zur Wärmemessung verwendet werden,

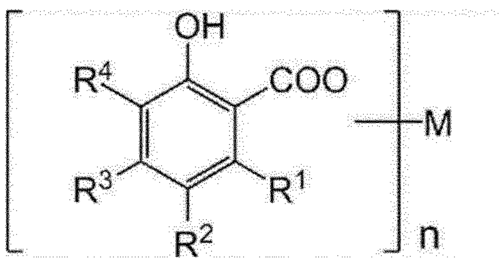

Allgemeine Formel (1)

wobei in der allgemeinen Formel (1) $R^1$, $R^2$, $R^3$ und $R^4$ jeweils unabhängig voneinander ein Wasserstoffatom, ein Halogenatom, eine Aminogruppe, eine Carboxygruppe, eine Carbamoylgruppe, eine Hydroxygruppe, eine Alkylsulfonylgruppe, eine Alkylgruppe oder eine Arylgruppe darstellen, wobei zwei benachbarte Gruppen aus $R^1$, $R^2$, $R^3$ und $R^4$ eine Ringstruktur bilden können, indem sie aneinanderbinden, M ein n-wertiges Metallatom darstellt und n eine ganze Zahl von 1 bis 3 darstellt.

7. Stimuliresponsive Kompositpartikel gemäß einem der Ansprüche 1 bis 6, worin ein Verhältnis einer Masse des elektronenabgebenden Farbstoffvorläufers zu einer Masse der Partikel der elektronenaufnehmenden Verbindung 0,02 bis 20 beträgt.

8. Stimuliresponsive Kompositpartikel gemäß einem der Ansprüche 1 bis 7, die einen durchschnittlichen äquivalenten Kreisdurchmesser von 1 μm bis 500 μm aufweisen.

9. Verfahren zur Herstellung der stimuliresponsiven Kompositpartikel gemäß einem der Ansprüche 1 bis 8, umfassend: einen Schritt des Durchführens einer Granulation durch Aufbringen einer Flüssigkeit, die Mikrokapseln enthält, die einen darin eingekapselten elektronenabgebenden Farbstoffvorläufer enthalten, auf die Oberfläche jedes Partikels einer elektronenannehmenden Verbindung, die den elektronenabgebenden Farbstoffvorläufer zur Farbentwicklung veranlasst.

10. Verfahren zur Herstellung der stimuliresponsiven Kompositpartikel gemäß einem der Ansprüche 1 bis 8, umfassend: einen Schritt des Sprühens und Trocknens einer Flüssigkeit, die Mikrokapseln, die einen darin eingekapselten elektronenabgebenden Farbstoffvorläufer enthalten, und Partikel einer elektronenannehmenden Verbindung, die den elektronenabgebenden Farbstoffvorläufer zur Farbentwicklung veranlasst, enthält.

## Revendications

1. Particules composites sensibles aux stimuli comprenant :

   des microcapsules contenant un précurseur de colorant donneur d'électrons encapsulé à l'intérieur ; et
   des particules d'un composé accepteur d'électrons amenant le précurseur de colorant donneur d'électrons à développer une couleur,
   dans lesquelles les microcapsules sont directement fixées à au moins une partie de la surface de chacune des particules du composé accepteur d'électrons.

2. Particules composites sensibles aux stimuli selon la revendication 1 qui sont utilisées pour l'une quelconque parmi une mesure de pression ou une mesure de chaleur.

3. Particules composites sensibles aux stimuli selon la revendication 1 ou la revendication 2, dans lesquelles le composé accepteur d'électrons est au moins un type de composé sélectionné dans le groupe consistant en une argile activée, une argile acide, un kaolin, un composé à base de phénol, un composé à base d'acide salicylique et un ester d'acide hydroxybenzoïque.

4. Particules composites sensibles aux stimuli selon l'une quelconque des revendications 1 à 3, dans lesquelles le composé accepteur d'électrons est au moins un type de composé sélectionné dans le groupe consistant en une argile activée, un composé à base de bisphénol, et un composé à base d'acide salicylique.

5. Particules composites sensibles aux stimuli selon l'une quelconque des revendications 1 à 4, dans lesquelles le composé accepteur d'électrons est une argile activée et utilisé pour une mesure de pression.

6. Particules composites sensibles aux stimuli selon l'une quelconque des revendications 1 à 4, dans lesquelles le composé accepteur d'électrons est un composé représenté par la formule générale (1) et utilisé pour une mesure de la chaleur,

   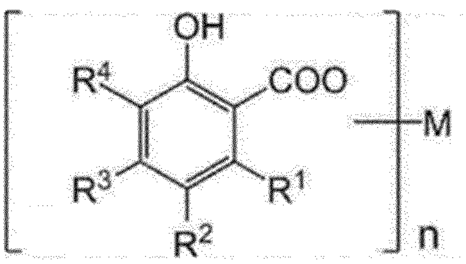

   Formule générale (1)

   dans la formule générale (1), $R^1$, $R^2$, $R^3$, et $R^4$ représentent chacun indépendamment un atome d'hydrogène, un atome d'halogène, un groupe amino, un groupe carboxy, un groupe carbamoyle, un groupe hydroxy, un groupe alkylsulfonyle, un groupe alkyle ou un groupe aryle, parmi $R^1$, $R^2$, $R^3$, et $R^4$, deux groupes adjacents peuvent former une structure cyclique en étant liés l'un à l'autre, M représente un atome de métal à valence n et n représente un nombre entier de 1 à 3.

7. Particules composites sensibles aux stimuli selon l'une quelconque des revendications 1 à 6, dans lesquelles le rapport d'une masse du précurseur de colorant donneur d'électrons sur une masse des particules du composé accepteur d'électrons est de 0,02 à 20.

8. Particules composites sensibles aux stimuli selon l'une quelconque des revendications 1 à 7 qui présentent un diamètre circulaire équivalent moyen de 1 μm à 500 μm.

9. Procédé de fabrication des particules composites sensibles aux stimuli selon l'une quelconque des revendications 1 à 8, comprenant :
   une étape de mise en oeuvre d'une granulation par l'application d'un liquide, qui contient des microcapsules contenant un précurseur de colorant donneur d'électrons encapsulé à l'intérieur, sur la surface de chacune des particules d'un composé accepteur d'électrons amenant le précurseur de colorant donneur d'électrons à développer une couleur.

**10.** Procédé de fabrication des particules composites sensibles aux stimuli selon l'une quelconque des revendications 1 à 8, comprenant :
une étape de pulvérisation et de séchage d'un liquide qui contient des microcapsules contenant un précurseur de colorant donneur d'électrons encapsulé à l'intérieur et des particules d'un composé accepteur d'électrons amenant le précurseur de colorant donneur d'électrons à développer une couleur,

FIG. 1

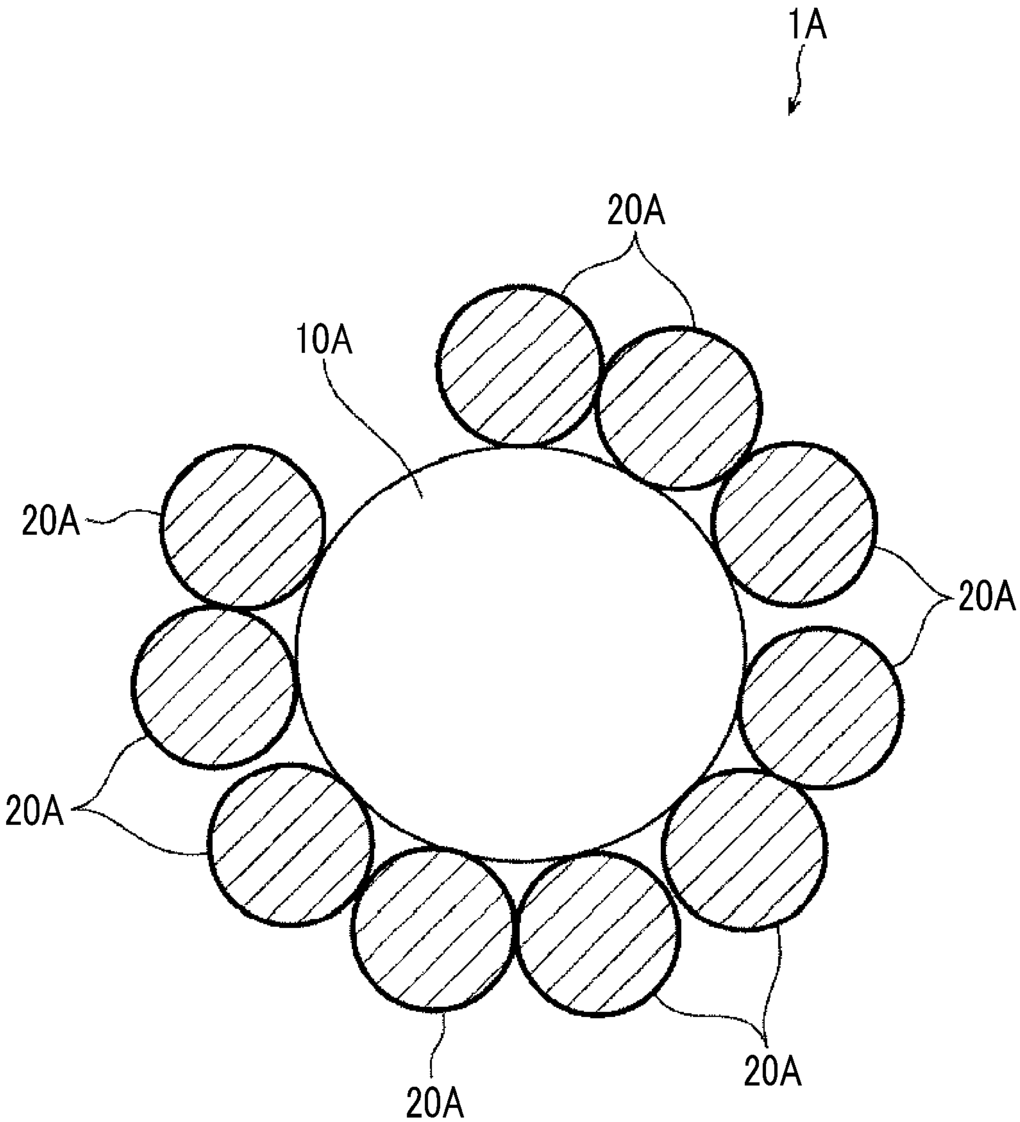

FIG. 2

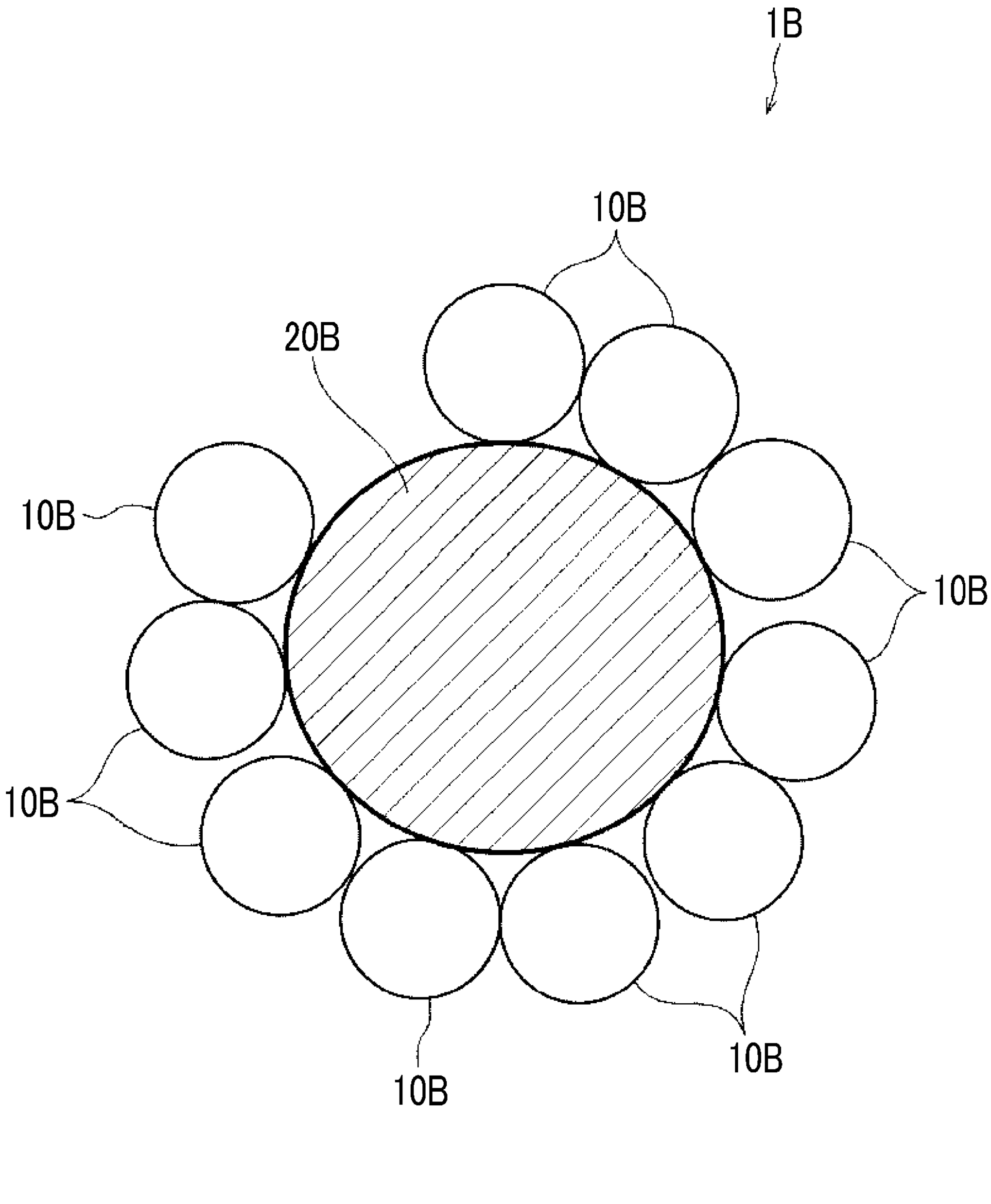

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009019949 A
- JP 2010181218 A
- US 2014161684 A1
- JP 5257272 A
- JP H05257272 A


### Non-patent literature cited in the description


- **KEIJI IWATA.** Polyurethane Resin Handbook. NIKKAN KOGYO SHIMBUN, LTD, 1987